(19) Europäisches Patentamt
European Patent Office
Office européen des brevets

(11) **EP 1 628 730 B1**

(12) **FASCICULE DE BREVET EUROPEEN**

(45) Date de publication et mention de la délivrance du brevet:
**12.05.2010   Bulletin 2010/19**

(51) Int Cl.:
***B01D 15/08*** *(2006.01)*

(21) Numéro de dépôt: **04767260.5**

(22) Date de dépôt: **04.06.2004**

(86) Numéro de dépôt international:
**PCT/FR2004/001392**

(87) Numéro de publication internationale:
**WO 2004/110586 (23.12.2004 Gazette 2004/52)**

(54) **ACIDES NUCLEIQUES EN TANT QUE NOUVEAUX SELECTEURS CHIRAUX SPECIFIQUES**

NUKLEINSÄUREN IN DER FORM SPEZIFISCHER NEUER CHIRALER SELEKTOREN

NUCLEIC ACIDS IN THE FORM OF SPECIFIC NOVEL CHIRAL SELECTORS

(84) Etats contractants désignés:
**AT BE BG CH CY CZ DE DK EE ES FI FR GB GR HU IE IT LI LU MC NL PL PT RO SE SI SK TR**

(30) Priorité:   **05.06.2003  FR 0306809**

(43) Date de publication de la demande:
**01.03.2006   Bulletin 2006/09**

(73) Titulaire: **UNIVERSITE JOSEPH FOURIER (GRENOBLE 1)**
**38040 Saint Martin d'Heres (FR)**

(72) Inventeurs:
 • **PEYRIN, Eric**
   **F-38120 Saint-Egrève (FR)**
 • **VILLET, Annick**
   **F-38700 La Tronche (FR)**
 • **GROSSET, Catherine**
   **F-38100 Grenoble (FR)**
 • **RAVEL, Anne**
   **F-38560 Jarric (FR)**
 • **JOURDAN, Eric**
   **F-38340 Voreppe (FR)**

(74) Mandataire: **Guerre, Dominique**
   **Cabinet Germain et Maureau**
   **12 Rue Boileau**
   **B.P. 6153**
   **69466 Lyon Cedex 06 (FR)**

(56) Documents cités:
 • JARRETT H W: "AFFINITY CHROMATOGRAPHY WITH NUCLEIC ACID POLYMERS" JOURNAL OF CHROMATOGRAPHY, BIOMEDICAL APPLICATIONS, ELSEVIER SCIENCE PUBLISHERS B.V. AMSTERDAM, NL, vol. 618, 1993, pages 315-339, XP002000129
 • KADONAGA J T: "PURIFICATION OF SEQUENCE-SPECIFIC BINDING PROTEINS BY DNA AFFINITY CHROMATOGRAPHY" METHODS IN ENZYMOLOGY, ACADEMIC PRESS INC, SAN DIEGO, CA, US, vol. 208, 1991, pages 10-23, XP008005241 ISSN: 0076-6879
 • DIRUSSO C ET AL: "NOVEL DNA-SEPHAROSE PURIFICATION OF THE FADR TRANSCRIPTION FACTOR" JOURNAL OF CHROMATOGRAPHY A, ELSEVIER SCIENCE, NL, vol. 677, 12 août 1994 (1994-08-12), pages 45-52, XP009024363 ISSN: 0021-9673
 • DATABASE MEDLINE [Online] US NATIONAL LIBRARY OF MEDICINE (NLM), BETHESDA, MD, US; 15 mai 1992 (1992-05-15), SOLOMON L R ET AL: "Enzymatic syntheses of DNA-silicas using DNA polymerase." XP002303457 Database accession no. NLM1326235 & ANALYTICAL BIOCHEMISTRY. 15 MAY 1992, vol. 203, no. 1, 15 mai 1992 (1992-05-15), pages 58-69, ISSN: 0003-2697
 • YASHIMA E ET AL: "High-performance affinity chromatography of oligonucleotides on nucleic acid analogue immobilized silica gel columns" JOURNAL OF CHROMATOGRAPHY, vol. 603, 1992, pages 111-119, XP009024370

**EP 1 628 730 B1**

- **VAN BREEMEN R B ET AL: "Immobilized thymine chromatography-mass spectrometry of oligonucleotides" 8 mai 1998 (1998-05-08), JOURNAL OF CHROMATOGRAPHY A, ELSEVIER SCIENCE, NL, VOL. 806, NR. 1, PAGE (S) 67-76 , XP004121169 ISSN: 0021-9673 paragraphes "introduction", "2.Experimental; 2.2.immobilization of thymine"**

- **DATABASE WPI Section Ch, Week 198847 Derwent Publications Ltd., London, GB; Class B04, AN 1988-335680 XP002267484 & JP 63 250397 A (TOYO SODA MFG CO LTD) 18 octobre 1988 (1988-10-18)**

LISTE DE SEQUENCES

<110> Université Joseph Fourier

<120> Acides nucléiques aptamères en tant que nouveaux sélecteurs chiraux spécifiques

<130> BR046785

<140>
<141>

<150> FR0306809
<151> 2003-06-05

<160> 4

<170> PatentIn Ver. 2.1

<210> 1

<211> 55
<212> ADN
<213> Séquence artificielle

<220>
<223> Description de la séquence artificielle: oligonucleotide

<400> 1
tcacgtgcat gatagacggc gaagccgtcg agttgctgtg tgccgatgca cgtga        55

<210> 2
<211> 49
<212> ADN
<213> Séquence artificielle

<220>
<223> Description de la séquence artificielle: oligonucleotide

<400> 2
aattcgctag ctggagcttg gattgatgtg gtgtgtgagt gcggtgccc        49

<210> 3
<211> 37
<212> ADN
<213> Séquence artificielle

<220>
<223> Description de la séquence artificielle: oligonucleotide

<400> 3
attatacctg ggggagtatt gcggaggaag gtataat        37

<210> 4
<211> 44
<212> ARN
<213> Séquence artificielle

<220>
<223> Description de la séquence artificielle: oligonucléotide

<400> 4
gacgagaagg agcgcugguu cuacuagcag guaggucacu cguc        44


**Description**

La présente invention concerne les techniques chromatographiques et électrophorétiques de séparation d'isomères optiques. L'invention a pour objet l'utilisation d'oligonucléotides comme nouveaux sélecteurs chiraux « sur mesure ».

La séparation d'énantiomères ou d'isomères optiques est considérée comme l'un des problèmes analytiques les plus difficile à résoudre. Les techniques chromatographiques et électrophorétiques de séparation chirale constituent, à l'heure actuelle, les méthodes de choix pour la séparation, la purification et la quantification d'énantiomères. La capacité du sélecteur chiral à reconnaître sa cible avec de fortes spécificités et affinités est à la base de l'efficacité de ces modes de séparation.

Ainsi, l'un des problèmes majeurs de la séparation d'énantiomères réside dans le fait qu'il n'existe pas de règle simple de choix du sélecteur en fonction de la structure des composés à séparer. Le choix de la phase stationnaire chirale (en chromatographie) ou du sélecteur chiral dissous dans le tampon de migration (en électrophorèse capillaire) pour séparer des énantiomères s'effectue en règle générale de manière empirique, en fonction des données existantes pour des molécules voisines.

De nouvelles voies de recherche ont été explorées afin de mettre au point des outils de reconnaissance moléculaire capable d'afficher des hautes spécificités et affinités. Parmi celles-ci, l'utilisation de molécules "empreintes" ( Sellergren, B. J. Chromatogr. A 2001, 906, 227; Hwang, C. C., Lee, W. C. J. Chromatogr. B 2001, 765, 45; Hart, B. R., Rush, D. J.; Shea, K. J. J. Am. Chem. Soc. 2000, 122, 460; Mayes, A. G.; Mosbach, K. Anal. Chem. 1996, 68, 3769; Sellergren, B. Shea, K. J. J. Chromatogr. A 1995, 690, 29) et d'anticorps constitue une avancée récente majeure (Hofstetter, O., Lindstrom, H., Hofstetter, H. Anal. Chem. 2002, 74, 2119; Nevanen, T. K., Soderholm, L., Kukkonen, K., Suortti, T., Teerinen, T.; Linder, M., Soderlund, H., Teeri, T. T., J. Chromatogr. A 2001, 925, 89; Hofstetter, O., Hofstetter, H., Wilchek, M., Schurig, V., Green, B. Int. J. Bio-Chromatogr. 2000, 5, 165; Hofstetter, O., Hofstetter, H., Schurig, V., Wilchek, M. J. Am. Chem. Soc. 1998, 120, 3251).

Ce type d'espèce moléculaire, produit en fonction d'une cible choisie, peut être considéré comme un sélecteur chiral "sur mesure".

Cependant, le développement d'anticorps spécifiques d'un isomère optique nécessite l'obtention d'anticorps dans des systèmes *in vivo.* En outre, les petites molécules sont faiblement immunogéniques et la taille relativement importante des anticorps limite la possibilité de greffage sur des phases stationnaires (pour une application en CLHP). Les molécules empreintes ont également des limitations telles que leur caractère « polyclonal », correspondant au fait qu'une grande disparité des sites énantiosélectifs et non-spécifiques se retrouve à la surface du polymère. Ceci entraîne, en CLHP, une efficacité médiocre, une traînée importante et une capacité de fixation énantiosélective limitée (Sellergren, B. J. Chromatogr. A 2001, 906, 227).

Le but de la présente invention est donc de proposer de nouvelles phases stationnaires chirales et de nouvelles phases mobiles chirales comprenant comme sélecteur chiral des oligonucléotides sélectionnés par affinité contre l'un des énantiomères à séparer. Ces oligonucléotides sont capables de reconnaître spécifiquement l'isomère optique contre lequel ils ont été sélectionnés.

Le développement de la technique d'amplification et de sélection *in vitro* par la technique SELEX (Wilson, D. S. ; Szostak, J. W. Annu. Rev. Biochem. 1999, 68, 611) a permis la découverte des aptamères, séquences d'oligonucléotides, capables de complexer une cible avec très haute affinité et spécificité. Il est ainsi possible de développer à la demande des oligonucléotides capables de reconnaître spécifiquement une molécule cible donnée. Certains aptamères ont ainsi été sélectionnés par affinité contre les énantiomères de certaines molécules. Par exemple, Geiger *et al.* (Geiger, A.; Burgstaller, P.; von der Eltz, H.; Roeder, A.; Famulok, M. Nucleic. Acids Res. 1996, 24, 1029) ont sélectionné un ARN aptamère capable de reconnaître et de discriminer énantiosélectivement la L-arginine (avec une constante de dissociation de l'ordre de 300 nM) de la D-arginine.

Cependant, les acides nucléiques aptamères n'ont encore jamais été utilisés en tant que sélecteurs chiraux spécifiques d'un énantiomère cible pré-désigné. Ainsi, à l'heure actuelle, seuls quelques exemples d'outils analytiques, basés sur la réaction aptamère-molécule cible, ont été décrits mettant en jeu, par exemple, des techniques ELISA ou électrophorétiques (Jayasena, S. D. Clin. Chem. 1999, 45, 1628). Deux exemples d'utilisation, en chromatographie d'affinité, d'aptamères immobilisés ont été publiés pour la purification de protéines (Romig, T. S.; Bell, C.; Drolet, D. W. J. Chromatogr. B 1999, 731, 275) ou la séparation d'analogues de l'adénosine (Deng, Q.; German, I.; Buchanan, D.; Kennedy, R. T. Anal. Chem. 2001, 73, 5415). Les oligonucléotides apatmères n'ont cependant jamais été utilisés dans des techniques chromatographiques ou électrophorétiques de séparation chirale « sur mesure ».

On a maintenant montré de façon inattendue que les acides nucléiques aptamères sélectionnés contre l'un des énantiomères d'une molécule constituent d'excellents sélecteur chiraux pour les techniques de séparation chirale « sur mesure ».

L'utilisation d'acides nucléiques aptamères comme sélecteur chiraux offre de nombreux avantages: Les oligonucléotides aptamères sont sélectionnés *in vitro,* stables en série ADN (pas de dénaturation irréversible) et facilement fonctionnalisables pour une immobilisation ou un marquage (greffage de biotine ou de fluorescéine par exemple). Ils peuvent, de plus, être spécifiques d'une grande variété de cible: macromolécules (lectines, enzymes, anticorps), aminoglycosides, antibiotiques, acides aminés et peptides.

En outre, on a également trouvé que l'utilisation d'acides nucléiques aptamères offre l'avantage du choix de l'ordre d'élution des énantiomères. En effet, selon le principe d'inversion de la reconnaissance chirale, si un aptamère reconnaît un énantiomère d'une molécule chirale (E1), alors l'image dans le mirroir correspondant reconnaîtra spécifiquement l'autre énantiomère (E2). Les couples D-ADN/L-ADN ou D-ARN/L-ARN permettront donc de choisir l'ordre d'élution chromatographique ou électrophorétique des énantiomères. Cette caractéristique peut être d'un intérêt majeur dans le domaine de la purification énantiosélective. De plus, un autre avantage majeur du L-ARN réside dans le fait qu'il est peu ou pas reconnu par les enzymes de dégradation (RNAses).

## Description de l'invention

L'invention concerne l'utilisation d'acides nucléiques comme sélecteurs chiraux « sur mesure » pour la séparation analytique ou préparative des isomères optiques ou énantiomères d'un composé.

L'invention concerne aussi l'utilisation d'un acide nucléique optiquement actif, en tant que sélecteur chiral, pour préparer une phase chirale pour la séparation des énantiomères d'un composé, ledit acide ayant une affinité pour l'un des énantiomères à séparer.

Dans un premier mode de réalisation, la phase chirale est une phase stationnaire chirale pour la séparation d'énantiomères comprenant un support solide et inerte sur lequel est fixé un sélecteur chiral dans laquelle le sélecteur chiral est un acide nucléique optiquement actif ayant une affinité pour l'un des énantiomères à séparer.

Dans un deuxième mode de réalisation, la phase chirale est une phase mobile chirale pour la séparation d'énantiomères comprenant un tampon de migration liquide et un sélecteur chiral en solution dans ledit tampon dans laquelle le sélecteur chiral est un acide nucléique optiquement actif ayant une affinité pour l'un des énantiomères à séparer.

De préférence, le sélecteur chiral est un oligonucléotide comportant de 10 à 60 nucléotides.

Dans un mode de réalisation particulier de l'invention, le sélecteur chiral est un acide désoxyribonucléique (ADN). Dans un mode de réalisation avantageux, le sélecteur chiral est un L-ADN.

Dans un autre mode de réalisation particulier de l'invention, le sélecteur chiral est un acide ribonucléique (ARN).

De préférence, le sélecteur chiral est un ARN comportant des bases modifiées rendant ledit ARN résistant aux nucléases. Avantageusement, le sélecteur chiral est un L-ARN.

Dans un mode de réalisation particulier de l'invention, le sélecteur chiral est l'oligonucléotide de la SEQ ID No. 1 ayant une affinité pour la D-vasopressine.

Dans un autre mode de réalisation de l'invention, le sélecteur chiral est l'oligonucléotide de la SEQ ID No. 2 ayant une affinité pour la L-tyrosinamide.

Dans un autre mode de réalisation de l'invention, le sélecteur chiral est l'oligonucléotide de la SEQ ID No. 3 ayant une affinité pour la D-adénosine.

Dans un autre mode de réalisation de l'invention, te sélecteur chiral est le L-ARN de la SEQ ID No. 4 ayant une affinité pour la D-arginine.

Dans les phases stationnaires chirales selon l'invention, le support solide inerte est de préférence fonctionnalisé avec de la streptavidine et le sélecteur chiral est de préférence un acide nucléique biotinylé. Préférentiellement, le support solide inerte est constitué de particules de polystyrène-divinylbenzène fonctionnalisées par de la streptavidine.

L'invention concerne aussi un procédé de préparation d'une phase stationnaire chirale pour la séparation d'énantiomères comprenant les étapes suivantes :

a) on sélectionne un acide nucléique optiquement actif ayant une affinité pour l'un des énantiomères à séparer par amplification et sélection *in vitro* sur ledit énantiomère,
b) on fixe l'acide nucléique sélectionné à l'étape a) sur un support solide inerte pour obtenir une phase stationnaire chirale.

Avantageusement, à l'étape a) on sélectionne un D-ADN et à l'étape b) on fixe le L-ADN de même séquence sur un support solide inerte pour obtenir une phase stationnaire chirale.

Avantageusement, à l'étape a) on sélectionne un D-ARN et à l'étape b) on fixe le L-ARN de même séquence sur un support solide inerte pour obtenir une phase stationnaire chirale.

De préférence, à l'étape b) l'acide nucléique est biotinylé et le support solide inerte est fonctionnalisé avec de la streptavidine permettant la fixation de l'acide nucléique sur le support solide inerte.

L'invention a également pour objet un procédé de préparation d'une phase mobile chirale pour la séparation d'énantiomères comprenant les étapes suivantes :

a) on sélectionne un acide nucléique optiquement actif ayant une affinité pour l'un des énantiomères à séparer par amplification et sélection *in vitro* sur ledit énantiomère,

b) on dissout l'acide nucléique sélectionné à l'étape a) dans un tampon de migration liquide pour obtenir une phase mobile chirale.

Avantageusement, à l'étape a) on sélectionne un D-ADN et à l'étape b) on dissout le L-ADN de même séquence dans un tampon de migration liquide pour obtenir une phase mobile chirale.

Avantageusement, à l'étape a) on sélectionne un D-ARN et à l'étape b) on dissout le L-ARN de même séquence dans un tampon de migration liquide pour obtenir une phase mobile chirale.

Un autre objet de la présente invention est un procédé de séparation d'énantiomères comprenant la mise en contact des d'énantiomères avec une phase stationnaire chirale ou une phase mobile chirale comportant un sélecteur chiral et la collecte d'au moins un énantiomère dans lequel le sélecteur chiral est un acide nucléique optiquement actif ayant une affinité pour l'un des énantiomères à séparer.

De préférence, le sélecteur chiral est un oligonucléotide comportant de 10 à 60 nucléotides.

Dans un mode de réalisation, le sélecteur chiral est un acide désoxyribonucléique (ADN). Avantageusement, le sélecteur chiral est un L-ADN.

Dans un autre mode de réalisation, le sélecteur chiral est un acide ribonucléique (ARN). Préférentiellement, le sélecteur chiral est un ARN comportant des bases modifiées rendant ledit ARN résistant aux nucléases. Plus préférentiellement, le sélecteur chiral est un L-ARN.

Dans un mode de réalisation de l'invention, le sélecteur chiral est l'oligonucléotide de la SEQ ID No. 1 ayant une affinité pour la D-vasopressine.

Dans un autre mode de réalisation de l'invention, le sélecteur chiral est l'oligonucléotide de la SEQ ID No. 2 ayant une affinité pour la L-tyrosineamide.

Dans un autre mode de réalisation de l'invention, le sélecteur chiral est l'oligonucléotide de la SEQ ID No. 3 ayant une affinité pour la D-adénosine.

Dans un autre mode de réalisation de l'invention, le sélecteur chiral est le L-ARN de la SEQ ID No. 4 ayant une affinité pour la D-arginine.

Dans les procédés mettant en oeuvre une phase stationnaire chirale, le support solide inerte de la phase stationnaire chirale est de préférence fonctionnalisé avec de la streptavidine et le sélecteur chiral est de préférence un acide nucléique biotinylé. Préférentiellement, le support solide inerte de la phase stationnaire chirale est constitué de particules de polystyrène-divinylbenzène fonctionnalisées par de la streptavidine.

La chiralité peut être définie comme une caractéristique structurale qui fait qu'une molécule ou un composé est asymétrique et non superposable à son image dans un mirroir. Les molécules présentant cette caractéristique sont appelées isomères optiques ou énantiomères.

On entend par « énantiomère » un isomère de configuration superposable à son homologue après symétrie dans un miroir. Les énantiomères sont des isomères dont l'ordre d'attachement des atomes dans la molécule est identique mais dont la répartition spatiale est telle qu'ils sont l'image en miroir l'un de l'autre, et donc non superposables.

Dans la présente invention, des acides nucléiques sont utilisés comme sélecteurs chiraux « sur mesure » pour la séparation des isomères optiques ou énantiomères d'un composé.

Les acides nucléiques ou sélecteurs chiraux « sur mesure » sont sélectionnés par affinité contre l'un des énantiomères à séparer. Ces acides nucléiques sont ainsi capables de retenir ou d'adsorber spécifiquement l'un des énantiomères à séparer.

On entend par « affinité » l'attraction chimique réciproque de deux substances.

On entend par « sélecteur chiral » un réactif optiquement actif capable de réagir, de reconnaître, de se lier ou de s'adsorber spécifiquement à l'un des isomères optiques ou énantiomères d'un composé.

Les acides nucléiques capables de retenir spécifiquement l'un des énantiomères à séparer sont sélectionnés par amplification et sélection *in vitro* sur ledit énantiomère selon la technique dite technique « SELEX ».

La technique « SELEX » permet de sélectionner des acides nucléiques appelés « aptamères » présentant une forte affinité et spécificité pour une molécule cible. Lorsque la molécule cible est l'un des isomères optiques de cette molécule, l'acide nucléique aptamère ou l'oligonucléotide aptamère obtenu par la méthode « SELEX » est spécifique de cet isomère optique (Geiger, A.; Burgstaller, P.; von der Eltz, H.; Roeder, A.; Famulok, M. *Nucleic. Acids Res.* 1996, *24,* 1029). De plus, on a montré dans la présente invention, que la spécificité et l'affinité de ces oligonucléotides aptamères est telle qu'ils peuvent être utilisés comme sélecteurs chiraux « sur mesure » pour la séparation des énantiomères de cette molécule cible.

Les techniques « SELEX » d'amplification et de sélection *in vitro* sont bien connues de l'homme du métier (Voir par exemple Wilson, D. S. ; Szostak, J. W. Annu. Rev. Biochem. 1999, 68, 611 ; WO 99/27133, WO 01/009380, US 5792613 et WO 00/056930). Habituellement, pour isoler des acides nucléiques se fixant spécifiquement sur une cible choisie (aptamères), la première étape consiste à fabriquer par synthèse chimique une banque d'ADN simple brin servant de matériel de base à la sélection. Les molécules de la banque contiennent deux régions fixes, zones d'hybridation pour deux amorces d'amplification entourant une « boîte » de environ 50 nucléotides insérés de façon aléatoire. Les molécules d'ADN sont transcrites (jusqu'à $10^{15}$ molécules) et sont ensuite soumises à sélection par chromatographie d'affinité. La colonne choisie est couplée à la cible. Les molécules fixées sont ensuite éluées par une phase mobile contenant la cible et amplifiées par PCR. On obtient ainsi, à travers plusieurs cycles, une nouvelle banque d'ADN enrichie en molécules, complexant spécifiquement la cible d'intérêt, dont les représentants sont clonés et séquencés.

Pour un composé cible donné, les méthodes « SELEX » permettent ainsi de sélectionner, selon des techniques connues, des acides nucléiques aptamères présentant une forte affinité et spécificité pour l'un des isomères optiques de ce composé cible.

Dans la présente invention, les acides nucléiques aptamères sont typiquement utilisés dans les techniques chromatographiques, électrophorétiques ou électrochromatographiques de séparation chirale. Ces techniques sont bien connues de l'homme du métier (voir par exemple Ceccato A. et al. STP Pharma Pratiques 9(4) 295-310, 1999). Parmi les méthodes chromatographiques existantes on citera notamment la chromatographie liquide haute performance (CLHP) et la chromatographie sur couche mince (CCM). On citera également les techniques électrocinétiques (CMEC) apparentés à la CLHP, comme l'électrophorèse capillaire de zone (ECZ), la chromatographie micellaire électrocinétique (CMEC) et l'électrophorèse capillaire (ECC).

Un des procédés habituels consiste à faire passer une solution comprenant un mélange des énantiomères d'un composé sur une phase stationnaire chirale ou dans une phase mobile chirale pour obtenir la retention plus forte d'un des énantiomères. Une élution soigneuse permet ensuite de collecter séparément les énantiomères du composé.

La présente invention concerne la séparation chirale analytique mais aussi la séparation chirale préparative. Typiquement, la séparation chirale analytique permet de déterminer la pureté énantiomérique d'un composé, de réaliser des dosages d'énantiomères ou de réaliser des études de pharmacocinétique stéréosélective.

Les phases stationnaires chirales, les phases mobiles chirales et les procédés de la présente invention permettent la séparation des énantiomères de tous types de composés. On citera notamment les acides aminés, les nucléosides, les oligopeptides, les sucres, les molécules chimiques et notamment les médicaments tels que les anti-inflammatoires non stéroïdiens, les β-bloquants, la warfarine, la thalidomide. De préférence, on sépare les énantiomères d'acides aminés, de nucléosides et d'oligopeptides.

Si différentes méthodes de séparation chirale existent, on peut toutefois les subdiviser en deux grandes catégories : la première concerne l'utilisation de phases stationnaires chirales capables d'effectuer des séparations d'énantiomères, et la seconde consiste en l'addition de sélecteurs chiraux à la phase mobile.

Les phases stationnaires chirales ainsi que les phases mobiles chirales sont bien connues de l'homme du métier et largement décrites dans la littérature (J. Chromatogr. A 2001, 906, 1-489).

Selon l'invention la phase stationnaire chirale utilisée pour la séparation des énantiomères ou des isomères optiques d'un composé comprend un support solide inerte sur lequel est fixé un sélecteur chiral dans laquelle le sélecteur chiral est un acide nucléique optiquement actif ayant une affinité pour l'un des énantiomères à séparer.

Les supports solides inertes sur lesquels est fixé l'acide nucléique ayant une affinité pour l'un des énantiomères à séparer sont connus de l'homme du métier. On citera par exemple les particules d'agarose, les particules de silice, et les particules de polystyrène-divinylbenzène.

Avantageusement, le support solide inerte est constitué de particules de polystyrène-divinylbenzène.

Les méthodes de fixation ou d'immobilisation des acides nucléiques sur le support solide inerte sont décrites dans la littérature et bien connues de l'homme du métier. En effet, les acides nucléiques sont facilement fonctionnalisés pour une immobilisation sur un support solide inerte via un pont biotine-streptavidine ou une liaison covalente faisant intervenir un bras espaceur.

Avantageusement, le support solide inerte est fonctionnalisé par de la streptavidine et l'acide nucléique est biotinylé pour l'immobilisation dudit acide nucléique sur le support solide. De manière particulièrement avantageuse, le support solide inerte est constitué de particules de polystyrène-divinylbenzène fonctionnalisées par de la streptavidine.

L'invention a également pour objet une phase mobile chirale pour la séparation d'énantiomères comprenant un tampon de migration liquide et un sélecteur chiral en solution dans ledit tampon dans laquelle le sélecteur chiral est un acide nucléique optiquement actif ayant une affinité pour l'un des énantiomères à séparer.

Les tampons de migration dans lesquels est dissout l'acide nucléique ayant une affinité pour l'un des énantiomères à séparer sont connus de l'homme du métier. On citera par exemple les tampons TRIS, borate, phosphate ou acétate.

Dans les phases stationnaires chirales et dans les phases mobiles chirales selon l'invention, le sélecteur chiral est un acide nucléique qui est obtenu par sélection et amplification *in vitro* selon la méthode « SELEX » sur l'un des énantiomères à séparer.

Selon la présente invention, on entend par "acide nucléique" une séquence ou une chaîne nucléotidique simple brin ou double brin pouvant être de type ADN ou ARN. De préférence, les acides nucléiques sont simple brin.

Le terme "acide nucléique" désigne également les oligonucléotides et les chaînes nucléotidiques modifiées. Typiquement, les acides nucléiques de la présente invention peuvent être préparés par les techniques classiques de biologie moléculaire ou par synthèse chimique.

De préférence, le sélecteur chiral est un oligonucléotide comprenant 10 à 100 nucléotides, préférentiellement de 10 à 60 nucléotides et plus préférentiellement de 20 à 50 nucléotides.

Le sélecteur chiral peut être de type ADN ou ARN.

Dans un mode de réalisation particulièrement avantageux de l'invention, le sélecteur chiral est un L-ADN ou un L-ARN.

Par « L-ADN » on entend un ADN qui possède des unités L-désoxyribose à la place des unités D-désoxyribose. A l'état naturel l'ADN comprend des unités D-désoxyribose (D-ADN).

Par « L-ARN » on entend un ARN qui possède des unités L-ribose à la place des unités D-ribose. A l'état naturel l'ARN comprend des unités D-ribose (D-ARN).

Le préfixe D désigne une molécule dextrogyre qui dévie la lumière polarisée vers la droite.

Le préfixe L désigne une molécule lévogyre qui dévie la lumière polarisée vers la gauche.

Un aptamère D-ADN et l'aptamère L-ADN de même séquence sont donc les deux énantiomères d'une même molécule.

De la même façon, un aptamère D-ARN et l'aptamère L-ARN de même séquence sont donc les deux énantiomères d'une même molécule.

Selon le principe d'inversion de la reconnaissance chirale, si un aptamère reconnaît un énantiomère d'une molécule chirale (E1), alors l'image dans le mirroir correspondant reconnaîtra spécifiquement l'autre énantiomère (E2). Les couples D-ADN/L-ADN ou D-ARN/L-ARN permettent donc de choisir l'ordre d'élution chromatographique ou électrophorétique des énantiomères. La sélection d'un ADN ou d'un ARN ayant une affinité pour l'énantiomère E1 d'une molécule chirale permettra de disposer automatiquement de l'aptamère qui reconnaîtra spécifiquement l'autre énantiomère E2 en synthétisant le L-ADN de même séquence ou le L-ARN de même séquence.

En outre, es aptamères en série ARN semblent avoir des propriétés de reconnaissance moléculaire plus importantes que les aptamères en série ADN. Par exemple, un aptamère en série ARN capable de discriminer les énantiomères de l'arginine avec une énantiosélectivité de plus de 12000 a été isolé (Geiger, A.; Burgstaller, P.; von der Eltz, H.; Roeder, A.; Famulok, M. *Nucleic. Acids Res.* 1996, *24*, 1029). Or la stabilité des molécules d'ARN peut être limitée. Ce problème peut prendre une ampleur très conséquente (rôle des RNAses notamment).

Par conséquent, lorsque le sélecteur chiral est de type ARN, il s'agit de préférence d'ARN modifié résistant aux nucléases. Typiquement cet ARN comporte des nucléotides modifiés le rendant résistant aux nucléases. Ces nucléotides modifiés comportent par exemple des bases modifiées dans lesquelles la fonction -OH en 2' est substituée par un -F ou un -NH$_2$. Les méthodes « SELEX » permettant de sélectionner directement par amplification et sélection des ARN insensibles aux nucléases sont connus de l'homme du métier (Jayasena, S. D. Clin. Chem. 1999, 45, 1628).

Encore plus avantageusement, lorsque le sélecteur chiral est de type ARN, il s'agit d'un L-ARN. Les molécules de L-ARN présentent l'avantage de ne pas être reconnues par les enzymes de dégradation (RNAses).

Dans un mode de réalisation de l'invention, la phase stationnaire chirale ou la phase mobile chirale comprend l'oligonucléotide de la SEQ ID No. 1. Cet oligonucléotide a été sélectionné par la méthode SELEX sur la vasopressine (Williams, K. P.; Liu, X. H.; Schumacher, T. N. M.; Lin, H. Y.; Ausiello, D. A.; Kim, P. S.; Bartel, D. P. Proc. Natl. Acad. Sci. USA 1997, 94, 11285). Il a maintenant été montré que cet oligonucléotide est capable de retenir avec une forte spécificité et affinité la D-vasopressine permettant ainsi la séparation des énantiomères de la vasopressine. Les phases chirales de la présente invention permettent donc par exemple la séparation des isomères optiques d'un oligopepetide.

Dans un autre mode de réalisation de l'invention, la phase stationnaire chirale ou la phase mobile chirale comprend l'oligonucléotide de la SEQ ID No. 2. Cet oligonucléotide a été sélectionné par la méthode SELEX sur la L-tyrosinamide (Vianini, E. Palumbo, M. Gatto, B. Biorg. Med. Chem. 2001, 9, 2543-2548). Il a maintenant été montré que cet oligonucléotide est capable de retenir avec une forte spécificité et affinité la L-tyrosinamide permettant ainsi la séparation des énantiomères de la tyrosinamide. Les phases chirales de la présente invention permettent donc par exemple la séparation des isomères optiques d'un dérivé d'acide aminé.

Dans un autre mode de réalisation de l'invention, la phase stationnaire chirale ou la phase mobile chirale comprend l'oligonucléotide de la SEQ ID No. 3. Cet oligonucléotide a été sélectionné par la méthode SELEX sur l'énantiomère D de l'adénosine (Huizenga, D. E. Szostak, J. W. Biochemistry 1995, 34, 656-665). Il a maintenant été montré que cet oligonucléotide est capable de retenir avec une forte spécificité et affinité la D-adénosine permettant ainsi la séparation des énantiomères de l'adénosine. Les phases chirales de la présente invention permettent donc par exemple la séparation des isomères optiques d'un nucléoside.

Dans un autre mode de réalisation de l'invention, la phase stationnaire chirale ou la phase mobile chirale comprend le L-ARN de la SEQ ID No. 4. Le D-ARN de même séquence a été sélectionné par la méthode SELEX sur l'arginine (A. T. Burgstaller, M. Kochoyan, M. Famulok, Nucleic Acids Res. 1995, 23, 4769 ; P. Chomczynski, Nucleic Acids Res. 1992, 20, 3791). Il a maintenant été montré que ce D-ARN est capable de retenir avec une forte spécificité et affinité la L-arginine permettant ainsi la séparation des énantiomères de l'arginine. En outre, le L-ARN de même séquence est capable de retenir avec une forte spécificité et affinité la D-arginine. Avec ce couple D-ARN/L-ARN l'ordre d'élution des énantiomères de l'arginine peut donc être choisi.

L'invention concerne aussi un procédé de préparation d'une phase stationnaire chirale pour la séparation d'énantiomères d'un composé ou d'une molécule comprenant les étapes suivantes :

a) on sélectionne un acide nucléique optiquement actif ayant une affinité pour l'un des énantiomères à séparer par amplification et sélection *in vitro* sur ledit énantiomère,

b) on fixe l'acide nucléique sélectionné à l'étape a) sur un support solide inerte pour obtenir une phase stationnaire chirale.

L'invention a également pour objet un procédé de préparation d'une phase mobile chirale pour la séparation d'énantiomères d'un composé ou d'une molécule comprenant les étapes suivantes :

a) on sélectionne un acide nucléique optiquement actif ayant une affinité pour l'un des énantiomères à séparer par amplification et sélection *in vitro* sur ledit énantiomère,

b) on dissout l'acide nucléique sélectionné à l'étape a) dans un tampon de migration liquide pour obtenir une phase mobile chirale.

A l'étape a) on sélectionne un acide nucléique ayant une forte affinité et spécificité pour l'un des isomères optiques du composé ou de la molécule cible par la méthode SELEX. L'acide nucléique aptamère ainsi obtenu est ensuite utilisé comme sélecteur chiral pour la préparation des phases chirales selon des techniques habituelles. La méthode SELEX permet la sélection d'aptamères D-ADN ou D-ARN. Lorsque l'on souhaite obtenir un aptamère L-ARN ou L-ADN reconnaissant spécifiquement l'énantiomère E1 d'une molécule chirale, il suffit de sélectionner l'aptamère D-ADN ou D-ARN reconnaissant spécifiquement l'énantiomère E2 de cette molécule puis de synthétiser le L-ADN ou le L-ARN correspondant de même séquence qui sera spécifique de l'énantiomère E1. Ces aptamères L-ADN ou L-ARN sont ensuite fixés sur le support solide ou dissous dans le tampon de migration.

Un autre objet de la présente invention est un procédé de séparation des énantiomères d'un composé ou d'une molécule comprenant la mise en contact du mélange d'énantiomères avec une phase stationnaire chirale ou une phase mobile chirale comportant un sélecteur chiral et la collecte d'au moins un énantiomère du mélange dans lequel le sélecteur chiral est un acide nucléique optiquement actif ayant une affinité pour l'un des énantiomères à séparer.

Dans un mode de réalisation particulier, une solution contenant le mélange d'énantiomères est mis en contact avec la phase stationnaire chirale dans un système chromatographique ou d'électrophorèse capillaire. L'un des énantiomère est spécifiquement reconnu par le sélecteur chiral ce qui se traduit par un temps de rétention plus long. Cette différence dans le temps de rétention permet la collecte séparé d'au moins un des énantiomères en sortie de colonne chromatographique ou de capillaire d'électrophorèse.

Dans un autre mode de réalisation, le sélecteur chiral est additionné au tampon de migration dans un système d'électrophorèse capillaire par exemple. Une solution contenant le mélange d'énantiomères est injecté dans le capillaire dans le tampon de migration. Comme précédemment, l'un des énantiomère est spécifiquement reconnu par le sélecteur chiral ce qui se traduit par un temps de migration plus long dans le capillaire. Cette différence dans le temps de rétention permet la collecte séparé d'au moins un des énantiomères en sortie de capillaire.

Dans les méthodes de séparation analytique, les énantiomères ainsi séparés puis collectés sont ensuite quantifiés ou dosés de manière précise selon des techniques habituelles.

Un autre objet de la présente invention est un procédé de séparation des énantiomères de la vasopressine comprenant la mise en contact d'un mélange d'énantiomères de la vasopressine avec une phase stationnaire chirale ou une phase mobile chirale comportant un sélecteur chiral et la collecte d'au moins un énantiomère dans lequel le sélecteur chiral est l'oligonucléotide de la SEQ ID No. 1 ayant une affinité pour la D-vasopressine.

Un autre objet de la présente invention est un procédé de séparation des énantiomères de la tyrosinamide comprenant la mise en contact d'un mélange d'énantiomères de la tyrosinamide avec une phase stationnaire chirale ou une phase mobile chirale comportant un sélecteur chiral et la collecte d'au moins un énantiomère de la tyrosinamide dans lequel le sélecteur chiral est l'oligonucléotide de la SEQ ID No. 2 ayant une affinité pour la L-tyrosinamide.

Un autre objet de la présente invention est un procédé de séparation des énantiomères de l'adénosine comprenant la mise en contact d'un mélange d'énantiomères de l'adénosine avec une phase stationnaire chirale ou une phase mobile chirale comportant un sélecteur chiral et la collecte d'au moins un énantiomère de l'adénosine dans lequel le sélecteur chiral est l'oligonucléotide de la SEQ ID No. 3 ayant une affinité pour la D-adénosine.

Un autre objet de la présente invention est un procédé de séparation des énantiomères de l'arginine comprenant la mise en contact d'un mélange d'énantiomères de l'arginine avec une phase stationnaire chirale ou une phase mobile chirale comportant un sélecteur chiral et la collecte d'au moins un énantiomère de l'arginine dans lequel le sélecteur chiral est le L-ARN de la SEQ ID No. 4 ayant une affinité pour la D-arginine.

Les exemples et figures ci-dessous permettront de mettre en évidence certains avantages et caractéristiques de la présente invention.

**Figures**

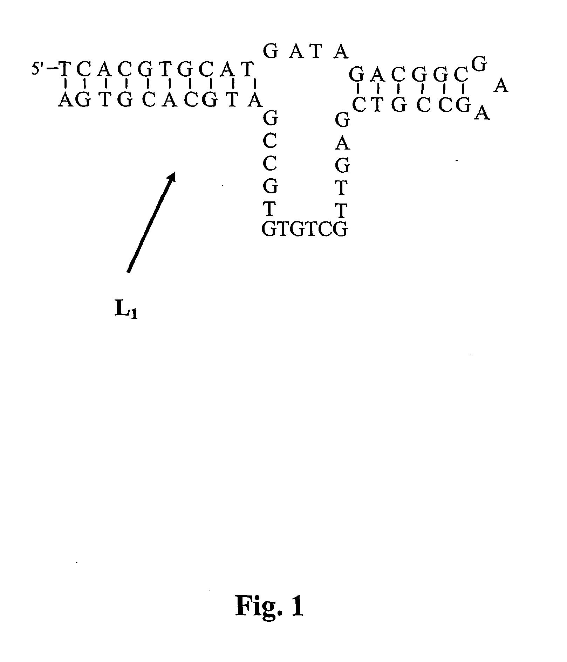

*Figure 1* : Séquence et structure secondaire de l'aptamère spécifiquement sélectionné contre la D-vasopressine. $L_1$ est la boucle de fixation spécifique du D-enantiomère.

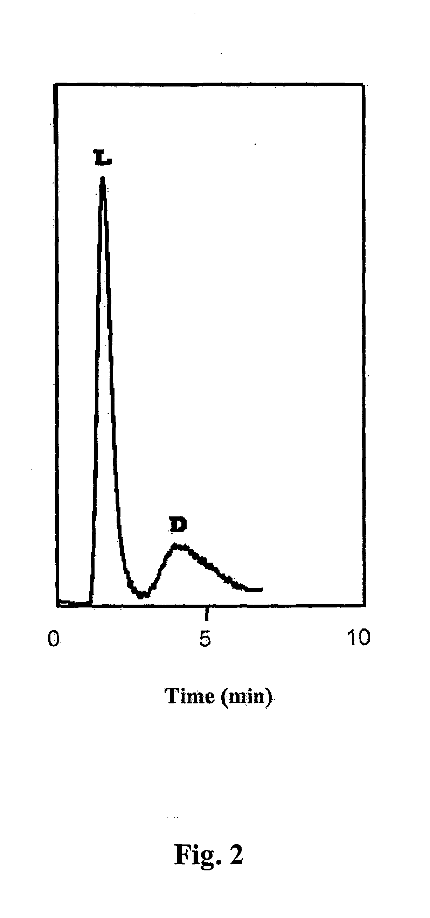

*Figure 2* : Séparation des énantiomères de la vasopressine (L: L-énantiomère et D: D-énantiomère) sur la phase stationnaire aptamère. Colonne: 2.1 x 30 mm. Température: 20°C. Composition phase mobile: tampon phosphate 5 mM, KCl 100 mM, $MgCl_2$ 3 mM, pH 7.0. Débit: 150$\mu$l/min. Injection: 100 nl (concentration 0.9mM). Détection UV à 195 nm.

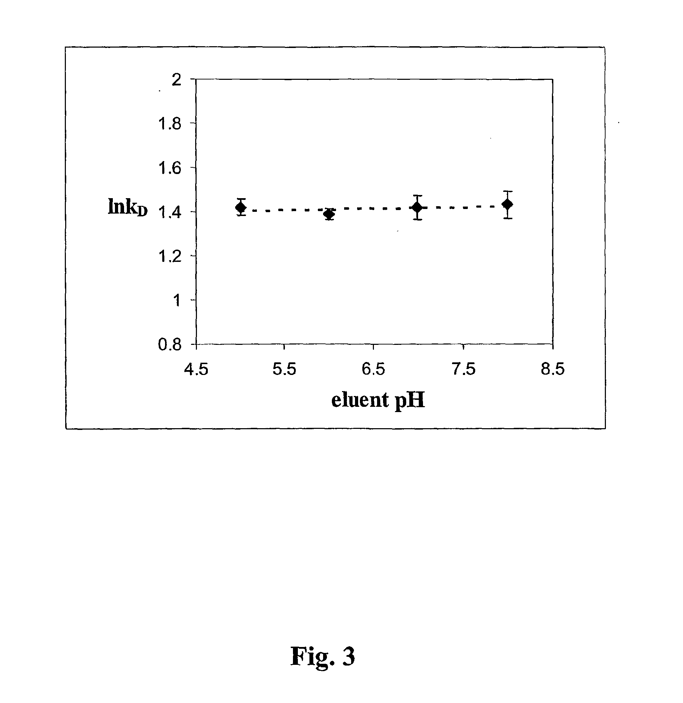

*Figure 3* : Lnk fonction du pH de la phase mobile pour le D-peptide ($k_D$). Colonne: 2.1 x 30 mm. Temperature: 20°C. Composition phase mobile: tampon phosphate 5 mM, KCl 100 mM, $MgCl_2$ 3 mM. Débit: 150$\mu$l/min. Injection: 100 nl (concentration 0.9mM). Détection UV à 195 nm.

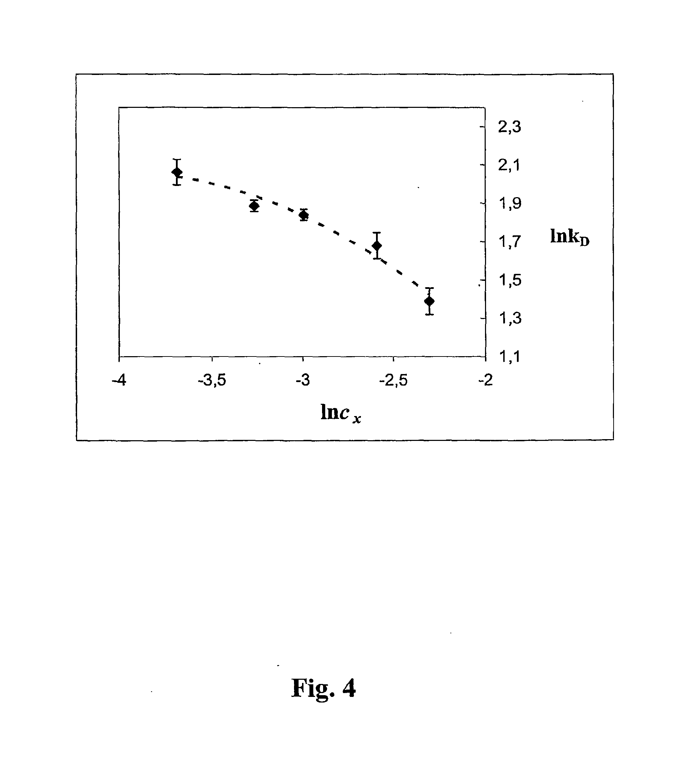

*Figure 4* : Lnk fonction de $Inc_x$ ($c_x$: concentration en KCl de la phase mobile 25-100 mM) pour le D-peptide ($k_D$). Colonne: 2.1 x 30 mm. Temperature: 20°C. Composition phase mobile: tampon phosphate 5 mM, KCl 100 mM, $MgCl_2$ 3 mM, pH 6.0. Débit: 150$\mu$l/min. Injection: 100 nl (concentration 0.9mM). Détection UV à 195 nm.

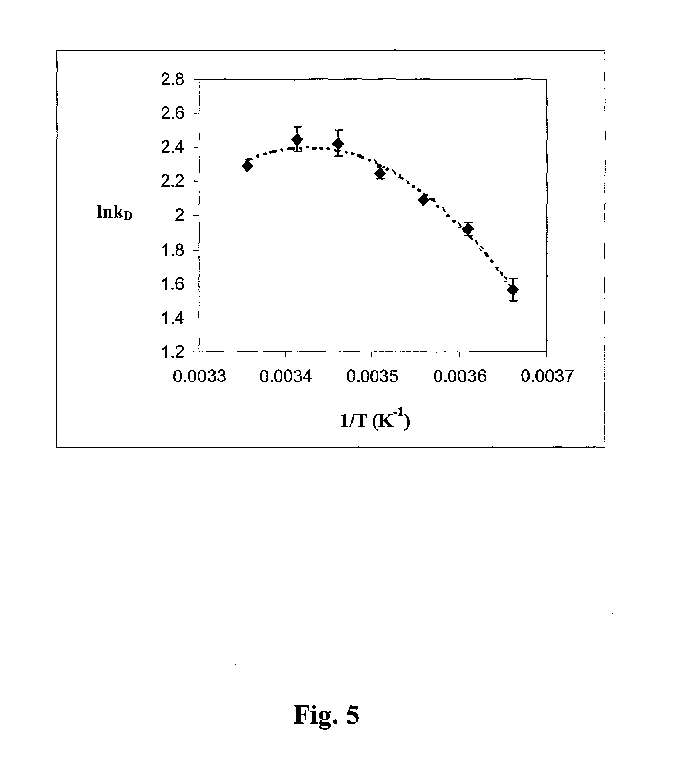

*Figure 5* : Lnk fonction de 1/T (T température de la colonne, 273-298K) pour le D-peptide ($k_D$). Colonne: 2.1 x 30 mm. Composition phase mobile: tampon phosphate 5 mM, KCl 100 mM, $MgCl_2$ 3 mM, pH 6.0. Débit: 150$\mu$l/min. Injection: 100 nl (concentration 0.9mM). Détection UV à 195 nm.

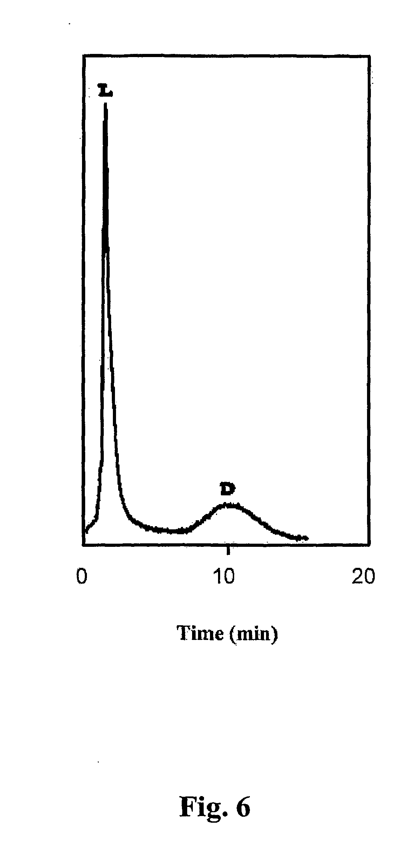

*Figure 6* : Séparation des énantiomères de la vasopressine (L: L-enantiomère and D: D-enantiomère) sur la phase stationnaire aptamère. Colonne: 2.1 x 30 mm. Temperature: 20°C. Composition phase mobile: tampon phosphate 5 mM, $MgCl_2$ 3 mM, pH 7.0. Débit: 150$\mu$l/min. Injection: 100 nl (concentration 0.9mM). Détection UV à 195 nm.

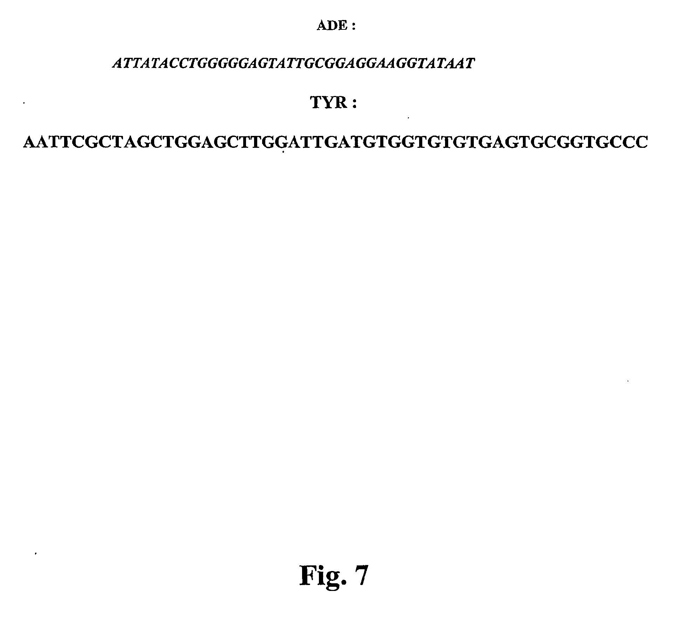

*Figure 7* : Séquences des aptamères en série ADN sélectionnés contre la D-adénosine (ADE) et la L-tyrosinamide (TYR).

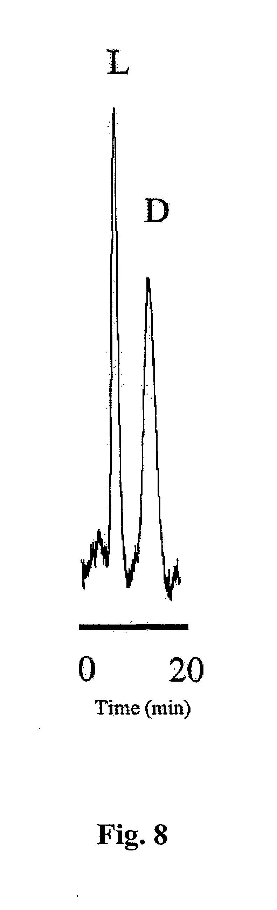

*Figure 8* : Séparation des énantiomères de l'adénosine (L: L-énantiomère and D: D-énantiomère) sur la phase stationnaire aptamère adénosine. Colonne: 0.75 x 370 mm. Température:24 °C. Composition phase mobile: tampon phosphate: 20 mM, 25 mM KCl, 1.5 mM $MgCl_2$ ajusté à pH 6. Débit: 50$\mu$l/min. Injection: 100 nl (quantité injectée 70 pmol). Détection UV à 260 nm.

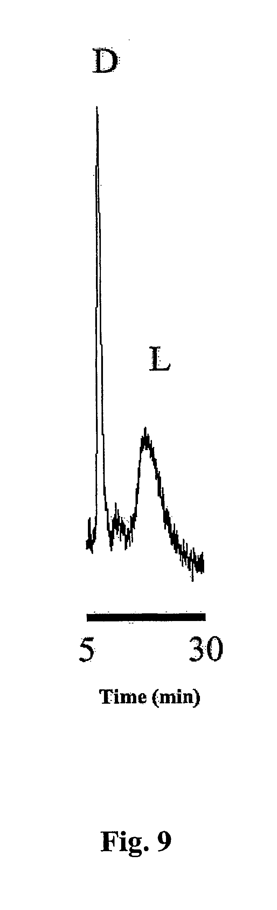

*Figure 9* : Séparation des énantiomères de la tyrosinamide (L: L-énantiomère and D: D-énantiomère) sur la phase stationnaire aptamère. Colonne: 0.75 x 250 mm. Température: 26°C. Composition phase mobile: tampon phosphate: 20 mM, 25 mM KCl, 1.5 mM $MgCl_2$ ajusté à pH 6. Débit: 20$\mu$l/min. Injection: 100 nl (quantité injectée 70 pmol). Détection UV à 224 nm.

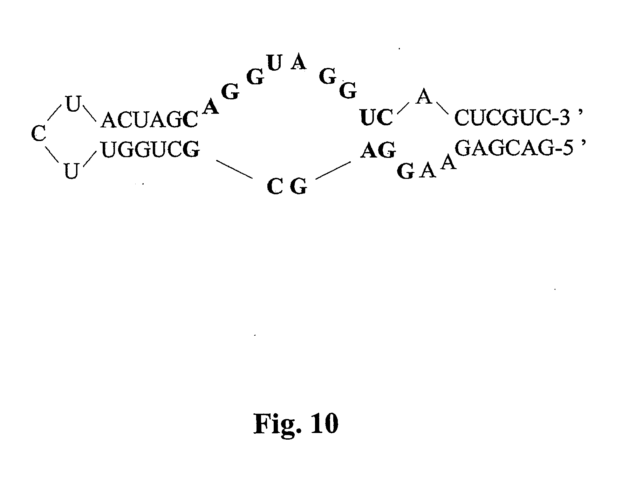

**Figure 10** : Séquence et structure secondaire de l'aptamère ARN énantiosélectif utilisé pour la séparation des énantiomères L et D de l'arginine.

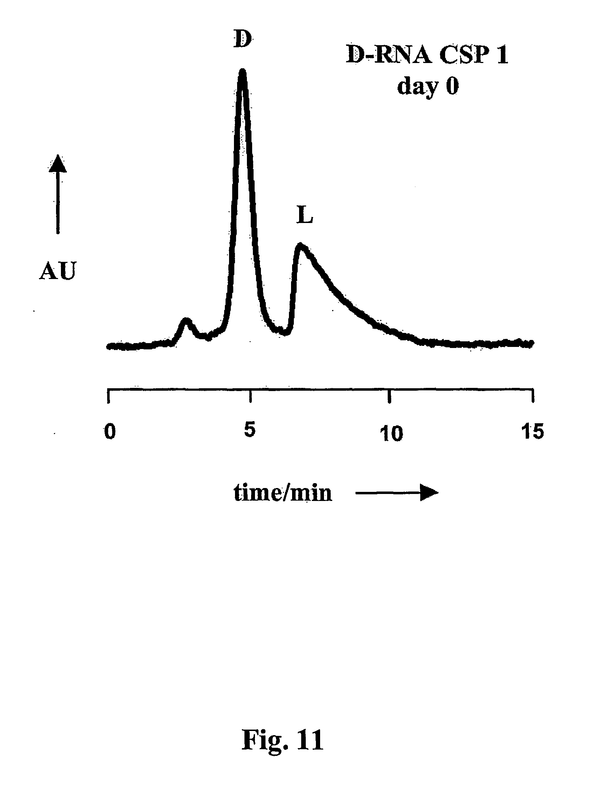

**Figure 11** : Séparation des énantiomères de l'arginine (L: L-énantiomère and D: D-énantiomère) sur la phase stationnaire aptamère D-RNA 1. Colonne: 0.75 x 370 mm. Température:4 °C. Composition phase mobile: tampon phosphate: 25 mM, 25 mM NaCl, 5 mM $MgCl_2$ ajusté à pH 7.3. Débit: 50$\mu$l/min. Injection: 100 nl (quantité injectée 50 ng). Détection UV à 208 nm.

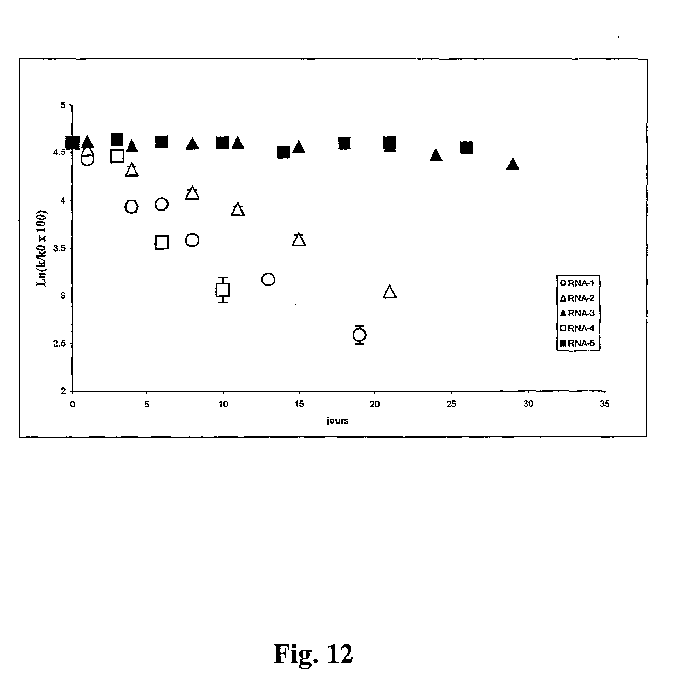

**Figure 12** : Rapport du facteur de rétention de l'énantiomère cible au jour J (k) sur le facteur de rétention de l'énantiomère cible au jour 0 (jour de fabrication) ($k_0$) en fonction du temps d'utilisation pour les différentes colonnes évaluées.

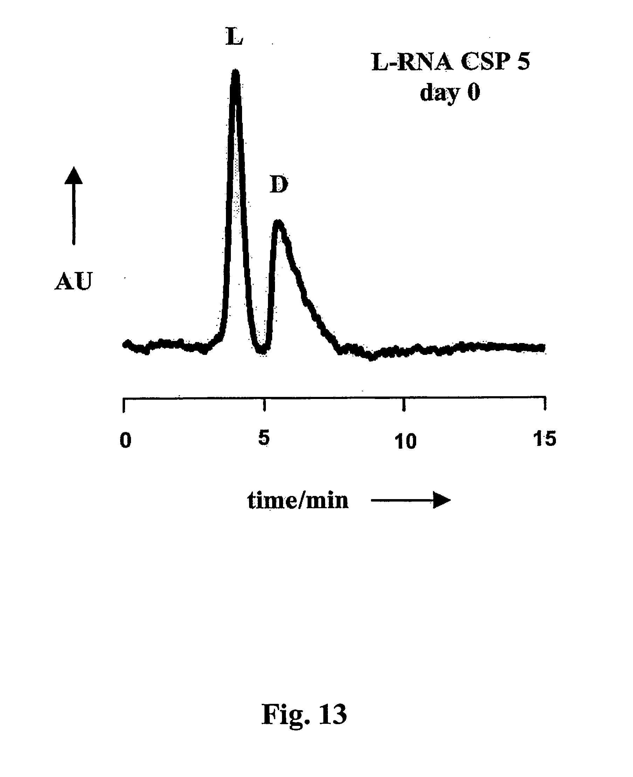

**Figure 13** : Séparation des énantiomères de l'arginine (L: L-énantiomère et D: D-énantiomère) sur la phase stationnaire aptamère L-ARN 5. Colonne: 0.75 x 370 mm. Température:4 °C. Composition phase mobile: tampon phosphate: 25 mM, 25 mM NaCl, 5 mM $MgCl_2$ ajusté à pH 7.3. Débit: 50$\mu$l/min. Injection: 100 nl (quantité injectée 50 ng). Détection UV à 208 nm.

**Exemples**

***Exemple 1 : Séparation chromatographique des énantiomères de la vasopressine***

Un aptamère en série ADN (biotinylé en 5') caractérisé par son énantioselectivité envers un oligopeptide, la D-vasopressine, fut immobilisé sur un support chromatographique contenant des greffons steptavidine. La phase stationnaire ainsi créée fut utilisée à des fins de séparation chromatographique des énantiomères de la vasopressine.

## 1. Matériel et méthodes

### 1.1. Réactifs et matériels

La vasopressine en série L (CYFQNCPRG-NH$_2$) fut fournie par la société Sigma (Saint-Quentin, France). La vasopressine en série D fut synthétisée par la société Millegen (Toulouse, France) à partir d'acides aminés en série D et purifiée par HPLC à polarité de phase inversée. L'identité du peptide fut confirmée par spectrométrie de masse. Na$_2$HPO$_4$, NaH$_2$PO$_4$, KCl et MgCl$_2$ furent fournis par Prolabo (Paris, France). L'eau HPLC fut obtenue par le système de purification Elgastat (Odil, Talant, France). L'oligonucléotide simple brin en série ADN de 55 bases (Figure 1) fut synthétisé et purifié par électrophorèse sur gel (Eurogentec, Herstal, Belgique).

La colonne chromatographique contenant des greffons streptavidine (BA POROS: 2.1 x 30 mm) remplie avec des particules de phase stationnaire de 20 $\mu$m et le tampon de fixation (10 mM phosphate, 150 mM NaCl, pH = 7.2) furent fournis par la société Applied Biosystems (Courtaboeuf, France).

### 1.2. Préparation de la phase stationnaire

Avant l'immobilisation sur le support chromatographique, l'aptamère fut traité en chauffant à 70°C pendant 5 min (tampon phosphate: 20 mM, 25 mM KCl, 1.5 mM MgCl$_2$ ajusté à pH 7.6) et refroidissant à température ambiante pendant 30 minutes. La colonne POROS fut équilibrée en faisant passer dans le système chromatographique ~20 ml de tampon de fixation. 29 nmol d'aptamère biotinylé furent appliquées dans la colonne chromatographique grâce à l'utilisation d'une pompe fixée à un débit de 100 $\mu$l/min pendant 3 heures et à température ambiante. ~10 ml de tampon de fixation passèrent ensuite dans la colonne afin d'éluer la fraction d'oligonucléotide non fixée. La quantité d'oligonucléotide fixée au support chromatographique fut quantifiée à partir de l'absorbance à 280 nm de la fraction de départ et de la fraction non fixée d'ADN. Après chaque utilisation, la colonne fut conservée à +4°C dans le tampon de fixation.

### 1.3. Appareillage

Le système HPLC comportait une pompe Shimadzu 10AT (Sarreguemines, France) un système d'auto-injection Shimadzu SIL-10AD, un détecteur UV-visible Shimadzu SPD-10A ($\lambda$ = 195 nm), un système de contrôle Shimadzu SCL-10A couplé à un logiciel d'analyse de données Class-VP (Shimadzu).

### 1.4. Conditions chromatographiques

La phase mobile était constituée de tampon phosphate 5 mM et de MgCl$_2$ 3 mM. Dans le cadre des études sur l'influence des paramètres du milieu sur la rétention des composés, le pH de la phase mobile variait de 5 à 8, la température de la colonne de 0 à 25°C et la concentration en KCl de 25 mM à 100 mM. Le débit de la phase mobile était de 150 $\mu$l/min et la quantité de peptide injectée était de 0.9 nmol. Les solutés furent injectés, à chaque condition, au moins trois fois.

### 1.5. Détermination des paramètres chromatographiques

L'affinité des solutés pour la phase stationnaire a été déterminée via le calcul du facteur de rétention $k$

$$k = \frac{t_R - t_0}{t_0} \qquad \textbf{(1)}$$

$t_R$ est le temps de rétention du soluté et $t_0$ est le temps de rétention nulle. $t_R$ fut déterminé à partir du moment 1$^{er}$ du pic. $t_0$ fut déterminé grâce au pic de la phase mobile.

L'efficacité de la colonne fut évaluée en calculant le nombre de plateaux théoriques h

$$h = \frac{L}{d_p N} \qquad \textbf{(2)}$$

avec.

$$N = 5.54\left(\frac{t_R}{\delta}\right)^2 \qquad\qquad (3)$$

$N$ est le nombre de plateaux théoriques, $\delta$ est la largeur du pic à mi-hauteur, L est la longueur de la colonne and $d_p$ est le diamètre des particules de POROS.
Le facteur d'asymétrie $A_s$ fut calculé à 10% de la hauteur du pic.

## 2. Résultats

2.1. Mise en évidence de l'énantiosélectivité de la colonne aptamère

21 nmol d'aptamère ont été immobilisées dans la colonne de 100 µl. La capacité de fixation maximum du support chromatographique POROS est de 12.5 nmol/100 µl pour un anticorps biotinylé. Ce résultat indique que l'oligonucléotide peut se fixer d'une manière plus importante, probablement parce que l'encombrement sterique est plus faible. Des conclusions similaires ont été reportées par Deng et al. (Deng, Q.; German, I.; Buchanan, D.; Kennedy, R. T. Anal. Chem. 2001, 73, 5415).
Un mélange d'énantiomère fut injecté dans des conditions similaires à celles employées pour la sélection de l'aptamère (tampon phosphate 5 mM, KCl 100 mM, MgCl$_2$ 3.0 mM, pH 7.0, température de la colonne 20°C). Dans ces conditions, le D-peptide est retenu par la colonne tandis que le L-peptide est élué dans le volume mort (Figure 2).

2.2. Détermination des conditions optimales de fixation et de séparation

Pour définir les conditions optimales de séparation, l'influence du pH et de la force ionique de la phase mobile et de la température de la colonne sur la rétention des solutés fut étudiée.

*Influence du pH de la phase mobile sur k*

L'analyse des effets du pH sur la rétention des solutés fut menée entre pH 5.0 et 8.0. La phase mobile était constituée de tampon phosphate 5 mM, KCl 100 mM, MgCl$_2$ 3.0 mM, pour une température de la colonne de 20°C. L'énantiomère L est élué dans le volume mort quel que soit le pH de la phase mobile. Pour l'énantiomère D, le pH de la phase mobile n'a aucune influence sur la rétention (Figure 3).

*Influence de la force ionique de la phase mobile sur k*

L'analyse des effets de la force ionique de la phase mobile sur la rétention des solutés fut menée dans un domaine de concentration de KCl variant de 25mM à 100 mM pour une température de colonne de 20°C. La phase mobile était constituée de tampon phosphate 5 mM, MgCl$_2$ 3 mM, pH 6.0. L'énantiomère L est élué dans le volume mort quelle que soit la force ionique de la phase mobile. Pour sa part, l'affinité de l'énantiomère D diminue avec l'augmentation de la concentration en sel (Figure 4). Cela démontre que des interactions coulombiennes sont impliquées dans la fixation de la D-vasopressine sur la phase aptamère.

*Influence de température de la colonne sur k*

L'analyse des effets de la température de la colonne sur la rétention des solutés fut menée dans un domaine variant de 0 à 25 °C. La phase mobile était constituée de tampon phosphate 5 mM, MgCl$_2$ 3 mM, pH 6.0. L'affinité du D-énantiomère pour la phase stationnaire passe par un maximum aux alentours de 20°C (phénomène conduit entropiquement aux faibles températures et enthalpiquement à 25°C) tandis que le L-énantiomère est toujours élué dans le volume mort.

2.3. Propriétés chromatographiques de la colonne *Enantioselectivité et temps d'analyse*

L'avantage majeur de la colonne aptamère chirale est que l'énantiosélectivité est quasi infinie puisque l'énantiomère L n'interagit pas avec la phase stationnaire. En ce sens, ce sélecteur chiral apparaît être aussi discriminant que les anticorps (Hofstetter, O.; Lindstrom, H.; Hofstetter, H. Anal. Chem. 2002, 74, 2119) et supérieur aux molécules empreintes (Sellergren, B. J. Chromatogr. A 2001, 906, 227). Il est important de noter ici que la procédure de fixation de l'aptamère sur le support POROS n'altère pas significativement ses capacités stéréoselectives et s'avère adéquate pour une utilisation en HPLC. La séparation des enantiomères de la vasopressine et le temps d'analyse peuvent être facilement modulés par modification de la force ionique du milieu et la température de la colonne. Les énantiomères du peptide ne peuvent être complètement résolus à force ionique importante et à faible température. Cependant, une séparation avec retour à la ligne de base en 7 minutes a été obtenue à température ambiante avec 100 mM deKCl dans la phase mobile (Figure 2) ou à température plus faible sans KCl dans l'eluant. A température ambiante, une augmentation importante de l'énantiosélectivité associée à une augmentation du temps d'analyse (15 minutes) a été observée à faible force ionique (Figure 6).

*Elargissement et asymétrie du pic*

La hauteur équivalent à un plateau théorique h pour l'énantiomère D est comprise entre 35 et 40 avec un facteur d'asymétrie $\sim$1.5 ($A_s$ idéal = 1). A titre de comparaison, h pour la L-phenylalanine anilide sur une phase stationnaire imprimée variait entre 35 et 150 en fonction du débit de la phase mobile (Sellergren, B. Shea, K. J. J. Chromatogr. A 1995, 690, 29). Sur une phase stationnaire anticorps, les valeurs de h observées pour divers acides aminés étaient comprises entre 20 et 200 (Hofstetter, O.; Lindstrom, H.; Hofstetter, H. Anal. Chem. 2002, 74, 2119). Ces résultats prouvent que l'efficacité de la colonne aptamère est similaire à celles obtenue pour les phases stationnaires chirales « sur mesure ».

*Stabilité de la colonne dans le temps*

La stabilité de la colonne fut évaluée en comparant le facteur de rétention de l'énantiomère D avant et après 5 mois d'utilisation dans les mêmes conditions. Pas de différence significative fut observée démontrant que la colonne aptamère est stable dans le temps.

Un oligonucléotide spécifiquement désigné contre un énantiomère cible peut donc être utilisé en tant que nouveau sélecteur chiral « sur mesure » en HPLC. Les conditions d'utilisation simples, l'énantiosélectivité quasi infinie, l'efficacité correcte et la très bonne stabilité obtenues avec ces aptamère en font un très bon outil pour une application industrielle pour le développement de nouvelles phases stationnaires chirales sélectionnées contre des énantiomères cibles de molécules d'intérêt biologique ou médicamenteux. Ce nouveau type de selecteur chiral peut également etre utilisé dans d'autres méthodologies analytiques.

*Exemple 2 : Utilisation en électrophorèse capillaire*

Les propriétés énantiosélectives des aptamères peuvent être également utilisées en électrophorèse capillaire chirale. Deux possibilités s'offrent à nous :

Cas 1 : dissoudre l'aptamère dans le tampon de migration à une concentration de l'ordre du millimolaire

Cas 2 : immobiliser l'aptamer sur un support chromatographique de type silice. On travaillera dans ce cas en électrochromatographie.

**1. Utilisation de l'aptamère en phase liquide**

1.1. Appareillage

Un système d'électrophorèse capillaire comportant un capillaire en silice fondue de diamètre interne autour de 50 $\mu$m et d'une longueur de 40 cm, une alimentation électrique, un dispositif d'injection et un détecteur fluorimètrique (ou un spectromètre de masse) peuvent être utilisés.

1.2. Conditions opératoires

Un tampon de migration de type tampon phosphate 50 mM pH 7.0 contenant 3 mM $MgCl_2$ peut être utilisé. L'aptamère d'interêt est dissous dans ce tampon à une concentration de l'ordre du micro ou du millimolaire. La tension appliquée entre les deux électrodes est de l'ordre de 20 kV. La migration s'effectue de l'anode vers la cathode en présence d'un flux électro-osmotique.

### 1.3. Résultats

Sans aptamères dans le tampon de migration, les deux énantiomères migrent dans le système électrophorétique à la même vitesse selon leur rapport masse/charge. En présence d'aptamères, la complexation sélective de l'énantiomère cible par l'oligonucléotide permet de séparer les deux isomères optiques. En effet, l'énantiomère cible migre beaucoup lentement pendant que l'autre énantiomère (non compléxé) a toujours la même vitesse de migration.

Du fait de l'ajout de l'oligonucléotide (qui absorbe dans l'UV) dans le milieu, obligation pour les molécules cibles d'être fluorescentes ou utilisation d'un système de détection plus perfectionné de type spectromètrie de masse.

## 2. Immobilisation de l'aptamère sur un support chromatographique de type silice

### 2.1. Appareillage

Un système d'électrophorèse capillaire comportant un capillaire en silice fondue de diamètre interne autour de 50 $\mu$m et d'une longueur de 40 cm, une alimentation électrique, un dispositif d'injection et un détecteur UV peuvent par exemple être utilisés.

### 2.2. Conditions opératoires

Le tampon de migration de type tampon phosphate 50 mM pH 7.0 contenant 3 mM $MgCl_2$ peut être utilisé. L'aptamère biotinylé (cf matériels et méthodes précedemment décrits) est immobilisé sur un support chromatographique type particules de silice fonctionalisées par de la streptavidine. Le capillaire en silice fondue est rempli de particules de phase stationnaire à l'aide du système de remplissage de capillaire Applied Biosystems (Courtaboeuf, France) et d'une pompe HPLC. La tension appliquée entre les deux électrodes est de l'ordre de 20 kV. La migration s'effectue de l'anode vers la cathode sous l'action du flux électro-osmotique créé.

### 2.3. Résultats

Seule l'affinité des énantiomères pour l'aptamère immobilisé joue un rôle dans la séparation, comme en chromatographie classique. Donc, l'énantiomère cible migre beaucoup plus lentement que l'autre isomère optique avec une enantiosélectivité équivalente à celle retrouvée dans le système chromatographique décrit ci-desussu. Une amélioration de l'éfficacité de la séparation est attendue du fait de l'absence d'un flux parabolique (tel que celui retouvé en chromatographie).

### Exemple 3 : Utilisation d'ARN résistant aux nucléases comme aptamères

Les aptamères en série ARN semblent avoir une capacité plus marquée à interagir avec une cible pré-désignée (notamment pour les petites molécules) que les aptamères en série ADN. Cependant, l'ARN est très sensible aux RNases de l'environnement et donc se dégrade rapidement. Cependant, il existe à l'heure actuelle des procédures de sélection SELEX établies à partir de bases modifiées, par example en substituant la fonction - OH en 2' par un -F ou un -$NH_2$ (Jayasena, S. D. Clin. Chem. 1999, 45, 1628). Ce type de SELEX modifié peut être mis à profit pour sélectionner un aptamère ARN insensible aux nucléases et spécifique d'un énantiomère cible. La procédure utilisée pour la séparation chirale est en tout point identique à celle que l'on vient de détailler ci-dessus.

A terme, à partir d'études de sélection *in vitro* performantes dirigées vers une sélection optimale d'aptamères énantiosélectifs, une banque de séquences spécifiques de nombreux couples d'énantiomères peut être mise en place.

### Exemple 4 : Séparation des énantiomères de l'adenosine et de la tyrosinamide en micro-chromatographie haute performance

Deux aptamères en série ADN (biotinylé en 5') caractérisés par leur affinité pour la D-adenosine (Huizenga, D. E. Szostak, J. W. Biochemistry 1995, 34, 656-665) et la L-tyrosinamide (Vianini, E. Palumbo, M. Gatto, B. Biorg. Med. Chem. 2001, 9, 2543-2548), furent immobilisés sur un support chromatographique contenant des greffons steptavidine. Les phases stationnaires ainsi créées furent utilisées à des fins de séparation chromatographique des énantiomères de ces deux molécules en micro-HPLC.

**1. Matériel et Méthodes**

1.1. Réactifs et matériels

La D-adenosine et la L-tyrosinamide furent fournies par la société Sigma (Saint-Quentin, France). La D-tyrosinamide fut synthétisée par la société Millegen (Toulouse, France) et purifiée par HPLC à polarité de phase inversée. L'identité du peptide fut confirmée par spectrométrie de masse. La L-adenosine fut fournie par la société Chemgenes (Ashland, USA). $Na_2HPO_4$, $NaH_2PO_4$, KCl et $MgCl_2$ furent fournis par Prolabo (Paris, France). L'eau HPLC fut obtenue par le système de purification Elgastat (Odil, Talant, France). Les oligonucléotides simple brin en série ADN (Figure 7) furent synthétisés et purifiés par électrophorèse sur gel (Eurogentec, Herstal, Belgique).

1.2. Préparation de la phase stationnaire et des micro-colonnes chromatographiques

Avant l'immobilisation sur le support chromatographique, les aptamères furent traités en chauffant à 70°C pendant 5 min (tampon phosphate: 20 mM, 25 mM KCl, 1.5 mM $MgCl_2$ ajusté à pH 6) et refroidissant à température ambiante pendant 30 minutes. 1000 $\mu$l (pour l'adenosine) ou 500 $\mu$l (pour la tyrosinamide) d'une suspension de particules de POROS streptavidine (20 $\mu$m) fournies par la société Applied Biosystems (Courtaboeuf, France) furent mis en contact pendant 3 heures, sous agitation à la température ambiante, avec 400 $\mu$l d'aptamère adénosine à la concentration de 79 nmol/ml ou avec 130 $\mu$l d'aptamère tyrosinamide à la concentration de 76 nmol/ml. Les particules de POROS ainsi modifiées (aptamères fixés sur le support) furent utilisées pour remplir les microcolonnes chromatographiques de dimension 0.75 x 370mm (pour l'adenosine) et 0.75 x 250mm (pour la tyrosinamide). Un système de remplissage sous haute pression (« packing device »), fourni par la société Applied Biosystems (Courtaboeuf, France), fut utilisé. Après chaque utilisation, les colonnes furent conservées à +4°C dans le tampon phosphate: 20 mM, 25 mM KCl, 1.5 mM $MgCl_2$ ajusté à pH 6.

1.3. Appareillage

Le système HPLC comportait une pompe Shimadzu 10AT (Sarreguemines, France), un système d'auto-injection Shimadzu SIL-10AD, un détecteur UV-visible Shimadzu SPD-10A avec une semi-micro cellule de 2 $\mu$l ($\lambda$ = 224 pour la tyrosinamide ou 260 nm pour l'adenosine), un système de contrôle Shimadzu SCL-10A couplé à un logiciel d'analyse de données Class-VP (Shimadzu).

1.4. Conditions chromatographiques

La phase mobile était constituée de tampon phosphate: 20 mM, 25 mM KCl, 1.5 mM $MgCl_2$ ajusté à pH 6. Le débit de la phase mobile était de 50 $\mu$l/min (pour l'adénosine) ou 20 $\mu$l/min (pour la tyrosinamide). La quantité de soluté injectée était de 70 pmol pour les énantiomères de l'adénosine et de la tyrosinamide. Les solutés furent injectés au moins trois fois.

1.5. Détermination des paramètres chromatographiques

L'affinité des solutés pour la phase stationnaire a été déterminée via le calcul du facteur de rétention $k$

$$k = \frac{t_R - t_0}{t_0} \qquad (1)$$

$t_R$ est le temps de rétention du soluté et $t_0$ est le temps de rétention nulle. $t_R$ fut déterminé à partir du moment 1$^{er}$ du pic. $t_0$ fut déterminé grâce au pic de la phase mobile.

L'énantiosélectivité apparente $\alpha$ a été calculée de la manière suivante

$$\alpha = \frac{k_2}{k_1} \qquad (2)$$

$k_2$ et $k_1$ représentent respectivement les facteurs de rétention des énantiomères les plus et les moins retenus.

## 2. **Résultats**

2.1. Résolution des énantiomères de l'adénosine et de la tyrosinamide par les deux micrcolonnes

Un mélange d'énantiomères fut injecté dans les deux colonnes à une température de 24°C pour la séparation des énantiomères de l'adénosine et 26°C pour la séparation des énantiomères de la tyrosinamide. Dans les deux cas, les énantiomères furent séparés facilement avec retour à la ligne de base (Figures 8 et 9). Les énantiomères les plus retenus par les colonnes chromatographiques correspondaient à ceux qui avaient été utilisés pour sélectionner l'aptamère, c'est à dire, la D-adénosine et la L-tyrosinamide.

2.2. Enantiosélectivité

L'énantiosélectivité obtenues avec la colonne aptamère adénosine était de l'ordre de 3,4. Dans le cas de la tyrosinamide, $\alpha$ était égal à 34, une des plus grandes énantiosélectivités jamais rapportées pour des petites molécules.

Nous avons été capable d'étendre l'application des oligonucléotides spécifiquement désignés contre un énantiomère cible à la séparation chirale de petites molécules (nucléoside et dérivé d'acide aminé) en micro-HPLC. Ce résultat démontre que ce nouveau type de selecteur chiral « sur mesure » peut être utilisé dans un domaine très large d'applications biologiques ou médicamenteuses.

## **Exemple 5 : Aptamères en série D-ARN et L-ARN en tant que nouvelles phases stationnaires chirales spécifiques**

### **1. Matériel et Méthodes**

1.1 Réactifs et matériels

Les énantiomères L et D de l'arginine sont fournis par la société Sigma (Saint-Quentin, France). $Na_2HPO_4$, $NaH_2PO_4$, NaCl et $MgCl_2$ sont fournis par Prolabo (Paris, France). L'inhibiteur de RNases, ProtectRNA®, est fourni par Sigma Aldrich. L'eau HPLC est obtenue par le système de purification Elgastat (Odil, Talant, France). Les oligonucléotides simple brin en série D-ARN ou L-ARN de 44 bases (Figure 10) sont synthétisés par Eurogentec (Herstal, Belgique) ou CureVac (Tubingen, Allemagne) et purifiés par électrophorèse sur gel ou HPLC.

1.2 Préparation de la phase stationnaire et des micro-colonnes chromatographiques

Avant l'immobilisation sur le support chromatographique, les aptamères furent traités en chauffant à 85°C pendant 5 min (tampon phosphate: 25 mM, 25 mM NaCl, 5 mM $MgCl_2$ ajusté à pH 7.3) et refroidissant à température ambiante pendant 30 minutes. 1000 $\mu$l d'une suspension de particules de POROS streptavidine (20 $\mu$m) fournies par la société Applied Biosystems (Courtaboeuf, France) furent mis en contact pendant 3 heures, sous agitation à la température ambiante, avec 60 nmol d'aptamères. Les particules de POROS ainsi modifiées (aptamères fixés sur le support) furent utilisées pour remplir les microcolonnes chromatographiques de dimension 0.75 x 370mm (phases stationnaires 1, 4, 5) ou 0.51 x 340mm (phases stationnaires 2, 3). Un système de remplissage sous haute pression (« packing device »), fourni par la société Applied Biosystems (Courtaboeuf, France), fut utilisé.

1.3 Conditions de stockage et étude de la stabilité

Après chaque utilisation, les colonnes 1, 2, 4 et 5 furent conservées dans le tampon phosphate: 25 mM, 25 mM NaCl, 5 mM $MgCl_2$ ajusté à pH 7.3. D'un autre coté, la colonne 3 fut stockée dans le tampon contenant l'inhibiteur de RNases (2 ml pour 1000 ml de phase mobile). Toutes les colonnes furent conservés à 4°C après chaque utilisation. Avant chaque expérience, la colonne 3 fut rincée avec la phase mobile de manière à éliminer l'inhibiteur de RNases. Pour une comparaison précise de la stabilité des phases stationnaires, les colonnes 2 et 3 furent fabriquées à partir du même échantillon de D-RNA (Eurogentec). Les colonnes 4 et 5 furent fabriquées à partir du D-RNA ou du L-RNA provenant du même fournisseur (CureVac). Les colonnes 2, 3 et 4, 5, furent utilisées dans des conditions opératoires identiques : même phase mobile, même période d'expériences et température de la colonne égale à 4°C.

1.4 Appareillage

Le système HPLC comportait une pompe Shimadzu 10AT (Sarreguemines, France), une vanne Rheodyne d'injection model 7125 (Interchim, Montluçon, France), un détecteur UV-visible Shimadzu SPD-10A ($\lambda$ = 208 nm), un

système de contrôle Shimadzu SCL-10A couplé à un logiciel d'analyse de données Class-VP (Shimadzu).

1.5 Conditions chromatographiques

La phase mobile était constituée tampon phosphate: 25 mM, 25 mM NaCl, 5 mM $MgCl_2$ ajusté à pH 7.3. Le débit de la phase mobile était de 50 $\mu$l/min (pour les phases stationnaires 1, 4, 5) ou 25 $\mu$l/min (pour les phases stationnaires 2, 3). La concentration de soluté injectée variait de 50 à 500 $\mu$g/ml. Les solutés furent injectés (100 ml) au moins trois fois.

1.6 Détermination des paramètres chromatographiques

Le facteur de rétention $k$ fut déterminé comme suit :

$$k = \frac{t_R - t_0}{t_0} \qquad (1)$$

$t_R$ est le temps de rétention du soluté et $t_0$ est le temps de rétention nulle. $t_R$ fut déterminé à partir du maximum du pic. $t_0$ fut déterminé grâce au pic du nitrate de sodium.

1.7 Etude de la dégradation des phases stationnaires ARN

Le facteur de rétention est classiquement donné par :

$$k = m_L K/V_M \qquad (2)$$

$m_L$ est le nombre de sites actifs dans la colonne, $V_M$ est le volume mort et $K$ est la constante d'association soluté-phase stationnaire. Donc, pour un système chromatographique donné, une variation du facteur de rétention dans des conditions identiques reflète un changement du nombre de sites actifs au sein de la colonne. La cinétique de dégradation de l'ARN fut donc étudiée indirectement en examinant la modification du facteur de rétention en fonction du temps. Les données de rétention furent ajustées à l'équation suivante :

$$ln k = -St + A \qquad (3)$$

S est la constante apparente de diminution du temps de rétention, $t$ le temps et A un paramètre d'ajustement.

## 2. Résultats

2.1 Séparation des énantiomères de l'arginine par la phase stationnaire D-ARN 1 et étude de la stabilité

Un mélange d'énantiomères de l'arginine fut injecté dans la colonne D-ARN 1 à des températures variant de 4°C à 17°C. Les énantiomères furent séparés avec retour à la ligne de base (Figure 11). L'énantiomère les plus retenu par la colonne chromatographique correspondait à celui qui avaient été utilisé pour sélectionner l'aptamère, c'est à dire, l'énantiomère L.

La stabilité de la phase stationnaire D-RNA CSP 1 fut évaluée en comparant le temps de rétention de l'énantiomère cible pendant plusieurs semaines. Le rapport du facteur de rétention au jour J (k) sur le facteur de rétention au jour 0 (jour de fabrication) ($k_0$) fut tracé en fonction du temps (Figure 12).

Les performances de la phase stationnaire D-ARN 1 diminuent très fortement comme le montre la constante S (Tableau 1). Une perte complète de la résolution fut observée après 19 jours d'utilisation.

Tableau 1 : Dégradation des phases stationnaires ARN

| Phase stationnaire | Configuration chirale | Stockage | S ($10^{-3}h^{-1}$) |
|:---:|:---:|:---:|:---:|
| 1,2,4 | D | Tampon phosphate | 4.3, 3.0, 7.0 |
| 3 | D | Inhibiteur RNase | 0.3 |
| 5 | L | Tampon phosphate | <0.1[a] |

[a] Pas de variation significative du facteur de rétention de l'énantiomère cible après 26 jours d'utilisation.

Ces résultats démontrent que le nombre de sites actifs de la colonne diminuent dramatiquement avec le temps. Comme notre travail n'a pas été mené dans un environnement « RNase free », lequel est incompatible avec une phase stationnaire ARN réutilisable, il est vraisemblable qu'une contamination de notre système par des RNases a eu lieu (P. Chomczynski, Nucleic Acids Res. 1992, 20, 3791), permettant la coupure des liaisons phosphodiester du RNA (B. N. Trawick, A. T. Daniher, J. K. Bashkin, Chem. Rev. 1998, 98, 939; Y. Li, R. R. Breaker, J. Am. Chem. Soc. 1999, 121, 5364. c) U. Kaukinen, S. Lyytikainen, S. Mikkola, H. Lonnberg, Nucleic Acids Res. 2002, 30, 468).

2.2 Rôle des RNAses dans la dégradation du D-ARN (phases stationnaires D-ARN 2 et 3)

De manière à tester cette hypothèse, deux autres colonnes (ARN 2 et 3) furent fabriquées et leur stabilité fut examinée. La colonne D-RNA 2 fut stockée dans la phase mobile tandis que la colonne ARN 3 fut conditionnée avec un inhibiteur de RNases. La phase stationnaire D-ARN 3 est 10 fois plus stable que la phase stationnaire D-ARN 2 (Tableau 1 et Figure 12), confirmant que les RNases jouent un rôle majeur dans la dégradation des colonnes D-ARN.

2.3 Stabilité de la phase stationnaire L-ARN 5

Afin de résoudre ce problème de stabilité, l'approche « image dans le miroir » fut testée. Deux colonnes D-ARN 4 et L-ARN 5 furent fabriquées et évaluées pendant plusieurs semaines. Tout d'abord, selon les principes de stéréochimie, l'énantiomère D de l'arginine est préférentiellement reconnu par l'image dans le miroir de l'ARN naturel, le L-ARN. Ceci est responsable d'une inversion de l'ordre d'élution sur la colonne L-ARN 5 (Figure 13).

De plus, la colonne L-ARN 5 se trouve être très stable dans le temps puisque aucune variation significative du facteur de rétention de l'énantiomère cible n'a été observée après 26 jours d'utilisation (Figure 12 et Tableau 1).

Nous avons démontré que l'approche « image dans le miroir » est une stratégie très efficace pour rendre les phases stationnaires chirales aptamères en série ARN très stables, pour des applications en analyse chromatographique de routine. D'autre part, cette méthode permet de contrôler l'ordre d'élution des énantiomères en fonction de la cible utilisée lors de la sélection des aptamères.

**Revendications**

1. Utilisation d'un acide nucléique optiquement actif, en tant que sélecteur chiral pour séparer les énantiomères d'un composé, ledit acide ayant une affinité pour l'un des énantiomères à séparer.

2. Utilisation d'un acide nucléique optiquement actif, en tant que sélecteur chiral, pour préparer une phase chirale pour la séparation des énantiomères d'un composé, ledit acide ayant une affinité pour l'un des énantiomères à séparer.

3. Utilisation selon la revendication 2, pour préparer une phase chirale mobile, **caractérisée en ce que** la phase chirale comprend un tampon de migration liquide dans lequel le sélecteur chiral est dissous.

4. Utilisation selon la revendication 2, pour préparer une phase chirale stationnaire, **caractérisée en ce que** la phase chirale comprend un support solide et inerte sur lequel le sélecteur chiral est fixé.

**5.** Utilisation selon l'une quelconque des revendications 1 à 4, **caractérisée en ce que** ledit acide nucléique est choisi parmi les ADN, les ARN, et les ARN comportant des bases modifiées rendant lesdits ARN résistants aux nucléases.

**6.** Utilisation selon la revendication 5, **caractérisée en ce que** ledit acide nucléique est choisi parmi les L-ADN et les L-ARN.

**7.** Utilisation selon l'une quelconque des revendications 1 à 6, **caractérisé en ce que** ledit acide nucléique est un oligonucléotide comportant de 10 à 60 nucléotides.

**8.** Procédé de préparation d'une phase stationnaire chirale pour la séparation des énantiomères d'un composé, **caractérisé en ce qu'**il comprend les étapes suivantes :

a) on sélectionne un acide nucléique optiquement actif ayant une affinité pour l'un des énantiomères à séparer par amplification et sélection *in vitro* sur ledit énantiomère,
b) on fixe l'acide nucléique sélectionné à l'étape a) sur un support solide inerte pour obtenir une phase stationnaire chirale.

**9.** Procédé selon la revendication 8, **caractérisé en ce que** à l'étape a) on sélectionne un D-ADN et à l'étape b) on fixe le L-ADN de même séquence sur un support solide inerte pour obtenir une phase stationnaire chirale.

**10.** Procédé selon la revendication 8, **caractérisé en ce que** à l'étape a) on sélectionne un D-ARN et à l'étape b) on fixe le L-ARN de même séquence sur un support solide inerte pour obtenir une phase stationnaire chirale.

**11.** Procédé selon l'une quelconque des revendications 8 à 10, **caractérisé en ce que** à l'étape b) l'acide nucléique est biotinylé et le support solide inerte est fonctionnalisé avec de la streptavidine permettant la fixation de l'acide nucléique sur le support solide inerte.

**12.** Procédé de préparation d'une phase mobile chirale pour la séparation des énantiomères d'un composé, **caractérisé en ce qu'**il comprend les étapes suivantes :

a) on sélectionne un acide nucléique optiquement actif ayant une affinité pour l'un des énantiomères à séparer par amplification et sélection *in vitro* sur ledit énantiomère,
b) on dissout l'acide nucléique sélectionné à l'étape a) dans un tampon de migration liquide pour obtenir une phase mobile chirale.

**13.** Procédé selon la revendication 12, **caractérisé en ce que** à l'étape a) on sélectionne un D-ADN et à l'étape b) on dissout le L-ADN de même séquence dans un tampon de migration liquide pour obtenir une phase mobile chirale.

**14.** Procédé selon la revendication 12, **caractérisé en ce que** à l'étape a) on sélectionne un D-ARN et à l'étape b) on dissout le L-ARN de même séquence dans un tampon de migration liquide pour obtenir une phase mobile chirale.

**15.** Procédé de séparation des énantiomères d'un composé comprenant la mise en contact des d'énantiomères avec une phase stationnaire chirale ou une phase mobile chirale comportant un sélecteur chiral et la collecte d'au moins un énantiomère **caractérisé en ce que** le sélecteur chiral est un acide nucléique optiquement actif ayant une affinité pour l'un des énantiomères à séparer.

**16.** Procédé selon la revendication 15, **caractérisé en ce que** le sélecteur chiral est un oligonucléotide comportant de 10 à 60 nucléotides.

**17.** Procédé selon la revendication 15 ou 16, **caractérisé en ce que** le sélecteur chiral est choisi parmi les ADN et les ARN.

**18.** Procédé selon la revendication 17, **caractérisé en ce que** le sélecteur chiral est un L-ADN.

**19.** Procédé selon la revendication 17, **caractérisé en ce que** le sélecteur chiral est un ARN comportant des bases modifiées rendant ledit ARN résistant aux nucléases.

**20.** Procédé selon la revendication 17, **caractérisé en ce que** le sélecteur chiral est un L-ARN.

21. Phase mobile chirale pour la séparation des énantiomères d'un composé comprenant un tampon de migration liquide et un sélecteur chiral en solution dans ledit tampon, **caractérisée en ce que** le sélecteur chiral est un acide nucléique optiquement actif ayant une affinité pour l'un des énantiomères à séparer.

22. Phase selon la revendication 21 **caractérisée en ce que** le sélecteur chiral est un oligonucléotide comportant de 10 à 60 nucléotides.

23. Phase selon l'une des revendications 21 ou 22, **caractérisée en ce que** le sélecteur chiral est choisi parmi les ADN et les ARN.

24. Phase selon la revendication 23 **caractérisée en ce que** le sélecteur chiral est un L-ADN.

25. Phase selon la revendication 23, **caractérisée en ce que** le sélecteur chiral est un ARN.

26. Phase selon la revendication 25, **caractérisée en ce que** le sélecteur chiral est un ARN comportant des bases modifiées rendant ledit ARN résistant aux nucléases.

27. Phase selon la revendication 25, **caractérisée en ce que** le sélecteur chiral est un L-ARN.

**Claims**

1. Use of an optically active nucleic acid as a chiral selector for separating the enantiomers of a compound, said acid having an affinity for one of the enantiomers to be separated.

2. Use of an optically active nucleic acid as a chiral selector, for preparing a chiral phase for separating the enantiomers of a compound, said acid having an affinity for one of the enantiomers to be separated.

3. Use according to Claim 2, for preparing a chiral mobile phase, **characterized in that** the chiral phase comprises a liquid migration buffer in which the chiral selector is dissolved.

4. Use according to Claim 2, for preparing a chiral stationary phase, **characterized in that** the chiral phase comprises an inert solid support to which the chiral selector is bound.

5. Use according to any one of Claims 1 to 4,
   **characterized in that** said nucleic acid is chosen from DNAs, RNAs, and RNAs comprising modified bases making said RNAs nuclease-resistant.

6. Use according to Claim 5, **characterized in that** said nucleic acid is chosen from L-DNAs and L-RNAs.

7. Use according to any one of Claims 1 to 6, **characterized in that** said nucleic acid is an oligonucleotide comprising from 10 to 60 nucleotides.

8. Method of preparing a chiral stationary phase for separating enantiomers, comprising the following steps:

   a) an optically active nucleic acid that has an affinity for one of the enantiomers to be separated is selected by *in vitro* amplification and selection on said enantiomer,
   b) the nucleic acid selected in step a) is bound to an inert solid support so as to obtain a chiral stationary phase.

9. Method according to Claim 8, **characterized in that**, in step a), a D-DNA is selected and, in step b), the L-DNA having the same sequence is bound to an inert solid support so as to obtain a chiral stationary phase.

10. Method according to Claim 8, **characterized in that**, in step a), a D-RNA is selected and, in step b), the L-RNA having the same sequence is bound to an inert solid support so as to obtain a chiral stationary phase.

11. Method according to any one of Claims 8 to 10, **characterized in that**, in step b), the nucleic acid is biotinylated, and the inert solid support is functionalized with streptavidin allowing binding of the nucleic acid to the inert solid support.

**12.** Method of preparing a chiral mobile phase for separating enantiomers, **characterized in that** it comprises the following steps:

> a) an optically active nucleic acid that has an affinity for one of the enantiomers to be separated is selected by *in vitro* amplification and selection on said enantiomer,
> b) the nucleic acid selected in step a) is dissolved in a liquid migration buffer so as to obtain a chiral mobile phase.

**13.** Method according to Claim 12, **characterized in that**, in step a), a D-DNA is selected and, in step b), the L-DNA having the same sequence is dissolved in a liquid migration buffer so as to obtain a chiral mobile phase.

**14.** Method according to Claim 12, **characterized in that**, in step a), a D-RNA is selected and, in step b), the L-RNA having the same sequence is dissolved in a liquid migration buffer so as to obtain a chiral mobile phase.

**15.** Method of separating enantiomers, that comprises bringing the enantiomers into contact with a chiral stationary phase or a chiral mobile phase comprising a chiral selector and collecting at least one enantiomer, **characterized in that** the chiral selector is an optically active nucleic acid that has an affinity for one of the enantiomers to be separated.

**16.** Method according to Claim 15, **characterized in that** the chiral selector is an oligonucleotide comprising from 10 to 60 nucleotides.

**17.** Method according to Claim 15 or 16, **characterized in that** the chiral selector is chosen from DNAs and RNAs.

**18.** Method according to Claim 17, **characterized in that** the chiral selector is an L-DNA.

**19.** Method according to Claim 17, **characterized in that** the chiral selector is an RNA comprising modified bases making said RNA nuclease-resistant.

**20.** Method according to Claim 17, **characterized in that** the chiral selector is an L-RNA.

**21.** Chiral mobile phase for separating enantiomers, comprising a liquid migration buffer and a chiral selector in solution in said buffer, **characterized in that** the chiral selector is an optically active nucleic acid that has an affinity for one of the enantiomers to be separated.

**22.** Phase according to Claim 21, **characterized in that** the chiral selector is an oligonucleotide comprising from 10 to 60 nucleotides.

**23.** Phase according to either of Claims 21 and 22, **characterized in that** the chiral selector is chosen from DNAs and RNAs.

**24.** Phase according to Claim 23, **characterized in that** the chiral selector is an L-DNA.

**25.** Phase according to Claim 23, **characterized in that** the chiral selector is an RNA.

**26.** Phase according to Claim 25, **characterized in that** the chiral selector is an RNA comprising modified bases making said RNA nuclease-resistant.

**27.** Phase according to Claim 25, **characterized in that** the chiral selector is an L-RNA.

**Patentansprüche**

**1.** Verwendung einer optisch aktiven Nucleinsäure als chiraler Selektor zur Trennung von Enantiomeren einer Verbindung, wobei die Nucleinsäure eine Affinität zu einem der zu trennenden Enantiomere aufweist.

**2.** Verwendung einer optisch aktiven Nucleinsäure als chiraler Selektor zur Herstellung einer chiralen Phase zur Trennung von Enantiomeren einer Verbindung, wobei die Nucleinsäure eine Affinität zu einem der zu trennenden Enantiomere aufweist.

**3.** Verwendung nach Anspruch 2 zur Herstellung einer mobilen chiralen Phase, **dadurch gekennzeichnet, daß** die chirale Phase einen flüssigen Migrationspuffer, in dem der chirale Selektor gelöst ist, umfaßt.

**4.** Verwendung nach Anspruch 2 zur Herstellung einer stationären chiralen Phase, **dadurch gekennzeichnet, daß** die chirale Phase einen inerten festen Träger, an den der chirale Selektor gebunden ist, umfaßt.

**5.** Verwendung nach einem der Ansprüche 1 bis 4, **dadurch gekennzeichnet, daß** die Nucleinsäure unter DNAs, RNAs und RNAs mit modifizierten Basen, die die RNAs nucleasebeständig machen, ausgewählt ist.

**6.** Verwendung nach Anspruch 5, **dadurch gekennzeichnet, daß** die Nucleinsäure unter L-DNAs und L-RNAs ausgewählt ist.

**7.** Verwendung nach einem der Ansprüche 1 bis 6, **dadurch gekennzeichnet, daß** es sich bei der Nucleinsäure um ein Oligonucleotid mit 10 bis 60 Nucleotiden handelt.

**8.** Verfahren zur Herstellung einer chiralen stationären Phase zur Trennung von Enantiomeren einer Verbindung, **dadurch gekennzeichnet, daß** man:

a) durch in-vitro-Amplifikation und -Selektion an dem Enantiomer eine optisch aktive Nucleinsäure, die eine Affinität zu einem der zu trennenden Enantiomere aufweist, selektiert,
b) die in Schritt a) selektierte Nucleinsäure an einen inerten festen Träger bindet, wobei man eine chirale stationäre Phase erhält.

**9.** Verfahren nach Anspruch 8, **dadurch gekennzeichnet, daß** man in Schritt a) eine D-DNA selektiert und in Schritt b) die L-DNA mit der gleichen Sequenz an einen inerten festen Träger bindet, wobei man eine chirale stationäre Phase erhält.

**10.** Verfahren nach Anspruch 8, **dadurch gekennzeichnet, daß** man in Schritt a) eine D-RNA selektiert und in Schritt b) die L-RNA mit der gleichen Sequenz an einen inerten festen Träger bindet, wobei man eine chirale stationäre Phase erhält.

**11.** Verfahren nach einem der Ansprüche 8 bis 10, **dadurch gekennzeichnet, daß** man in Schritt b) die Nucleinsäure biotinyliert und den inerten festen Träger mit Streptavidin funktionalisiert, was die Bindung der Nucleinsäure an den inerten festen Träger erlaubt.

**12.** Verfahren zur Herstellung einer mobilen chiralen Phase zur Trennung von Enantiomeren einer Verbindung, **dadurch gekennzeichnet, daß** man:

a) durch in-vitro-Amplifikation und -Selektion an dem Enantiomer eine optisch aktive Nucleinsäure, die eine Affinität zu einem der zu trennenden Enantiomere aufweist, selektiert,
b) die in Schritt a) selektierte Nucleinsäure in einem flüssigen Migrationspuffer löst, wobei man eine mobile chirale Phase erhält.

**13.** Verfahren nach Anspruch 12, **dadurch gekennzeichnet, daß** man in Schritt a) eine D-DNA selektiert und in Schritt b) die L-DNA mit der gleichen Sequenz in einem flüssigen Migrationspuffer löst, wobei man eine mobile chirale Phase erhält.

**14.** Verfahren nach Anspruch 12, **dadurch gekennzeichnet, daß** man in Schritt a) eine D-RNA selektiert und in Schritt b) die L-RNA mit der gleichen Sequenz in einem flüssigen Migrationspuffer löst, wobei man eine mobile chirale Phase erhält.

**15.** Verfahren zur Trennung von Enantiomeren einer Verbindung, bei dem man die Enantiomere mit einer stationären chiralen Phase oder einer mobilen chiralen Phase, die einen chiralen Selektor umfaßt, in Berührung bringt und mindestens ein Enantiomer gewinnt, **dadurch gekennzeichnet, daß** es sich bei dem chiralen Selektor um eine optisch aktive Nucleinsäure, die eine Affinität zu einem der zu trennenden Enantiomere aufweist, handelt.

**16.** Verfahren nach Anspruch 15, **dadurch gekennzeichnet, daß** es sich bei dem chiralen Selektor um ein Oligonucleotid mit 10 bis 60 Nucleotiden handelt.

**17.** Verfahren nach einem der Ansprüche 15 oder 16, **dadurch gekennzeichnet, daß** der chirale Selektor unter DNAs und RNAs ausgewählt wird.

**18.** Verfahren nach Anspruch 17, **dadurch gekennzeichnet, daß** es sich bei dem chiralen Selektor um eine L-DNA handelt.

**19.** Verfahren nach Anspruch 17, **dadurch gekennzeichnet, daß** es sich bei dem chiralen Selektor um eine RNA mit modifizierten Basen, die die RNA nucleasebeständig machen, handelt.

**20.** Verfahren nach Anspruch 17, **dadurch gekennzeichnet, daß** es sich bei dem chiralen Selektor um eine L-RNA handelt.

**21.** Mobile chirale Phase zur Trennung von Enantiomeren einer Verbindung, umfassend einen flüssigen Migrationspuffer und einen darin gelösten chiralen Selektor, **dadurch gekennzeichnet, daß** es sich bei dem chiralen Selektor um eine optisch aktive Nucleinsäure, die eine Affinität zu einem der zu trennenden Enantiomere aufweist, handelt.

**22.** Phase nach Anspruch 21, **dadurch gekennzeichnet, daß** es sich bei dem chiralen Selektor um ein Oligonucleotid mit 10 bis 60 Nucleotiden handelt.

**23.** Phase nach Anspruch 21 oder 22, **dadurch gekennzeichnet, daß** der chirale Selektor unter DNAs und RNAs ausgewählt ist.

**24.** Phase nach Anspruch 23, **dadurch gekennzeichnet, daß** es sich bei dem chiralen Selektor um eine L-DNA handelt.

**25.** Phase nach Anspruch 23, **dadurch gekennzeichnet, daß** es sich bei dem chiralen Selektor um eine RNA handelt.

**26.** Phase nach Anspruch 25, **dadurch gekennzeichnet, daß** es sich bei dem chiralen Selektor um eine RNA mit modifizierten Basen, die die RNA nucleasebeständig machen, handelt.

**27.** Phase nach Anspruch 25, **dadurch gekennzeichnet, daß** es sich bei dem chiralen Selektor um eine L-RNA handelt.

**Fig. 1**

**L**

**D**

0            5            10

**Time (min)**

**Fig. 2**

**Fig. 3**

**Fig. 4**

**Fig. 5**

Time (min)

**Fig. 6**

ADE :

*ATTATACCTGGGGGAGTATTGCGGAGGAAGGTATAAT*

TYR :

AATTCGCTAGCTGGAGCTTGGATTGATGTGGTGTGTGAGTGCGGTGCCC

# Fig. 7

Fig. 8

**Fig. 9**

**Fig. 10**

**D-RNA CSP 1 day 0**

Fig. 11

**Fig. 12**

Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9927133 A
- WO 01009380 A
- US 5792613 A
- WO 00056930 A
- BR 046785
- FR 0306809

**Littérature non-brevet citée dans la description**

- **Sellergren, B.** *J. Chromatogr. A,* 2001, vol. 906, 227
- **Hwang, C. C. ; Lee, W. C.** *J. Chromatogr. B,* 2001, vol. 765, 45
- **Hart, B. R. ; Rush, D. J. ; Shea, K. J.** *J. Am. Chem. Soc.,* 2000, vol. 122, 460
- **Mayes, A. G. ; Mosbach, K.** *Anal. Chem.,* 1996, vol. 68, 3769
- **Sellergren, B. ; Shea, K. J.** *J. Chromatogr. A,* 1995, vol. 690, 29
- **Hofstetter, O. ; Lindstrom, H. ; Hofstetter, H.** *Anal. Chem.,* 2002, vol. 74, 2119
- **Nevanen, T. K. ; Soderholm, L. ; Kukkonen, K. ; Suortti, T. ; Teerinen, T. ; Linder, M. ; Soderlund, H. ; Teeri, T. T.** *J. Chromatogr. A,* 2001, vol. 925, 89
- **Hofstetter, O. ; Hofstetter, H. ; Wilchek, M. ; Schurig, V. ; Green, B.** *Int. J. Bio-Chromatogr.,* 2000, vol. 5, 165
- **Hofstetter, O. ; Hofstetter, H. ; Schurig, V. ; Wilchek, M.** *J. Am. Chem. Soc.,* 1998, vol. 120, 3251
- **Wilson, D. S. ; Szostak, J. W.** *Annu. Rev. Biochem.,* 1999, vol. 68, 611
- **Geiger, A. ; Burgstaller, P. ; von der Eltz, H. ; Roeder, A. ; Famulok, M.** *Nucleic. Acids Res.,* 1996, vol. 24, 1029
- **Jayasena, S. D.** *Clin. Chem.,* 1999, vol. 45, 1628
- **Romig, T. S. ; Bell, C. ; Drolet, D. W.** *J. Chromatogr. B,* 1999, vol. 731, 275
- **Deng, Q. ; German, I. ; Buchanan, D. ; Kennedy, R. T.** *Anal. Chem.,* 2001, vol. 73, 5415
- **Ceccato A. et al.** *STP Pharma Pratiques,* 1999, vol. 9 (4), 295-310
- *J. Chromatogr. A,* 2001, vol. 906, 1-489
- **Williams, K. P. ; Liu, X. H. ; Schumacher, T. N. M. ; Lin, H. Y. ; Ausiello, D. A. ; Kim, P. S. ; Bartel, D. P.** *Proc. Natl. Acad. Sci. USA,* 1997, vol. 94, 11285
- **Vianini, E. ; Palumbo, M. ; Gatto, B.** *Biorg. Med. Chem.,* 2001, vol. 9, 2543-2548
- **Huizenga, D. E. ; Szostak, J. W.** *Biochemistry,* 1995, vol. 34, 656-665
- **A. T. Burgstaller ; M. Kochoyan ; M. Famulok.** *Nucleic Acids Res.,* 1995, vol. 23, 4769
- **P. Chomczynski.** *Nucleic Acids Res.,* 1992, vol. 20, 3791
- **Vianini, E. ; Palumbo ; M. Gatto.** *B. Biorg. Med. Chem.,* 2001, vol. 9, 2543-2548
- **B. N. Trawick ; A. T. Daniher ; J. K. Bashkin.** *Chem. Rev.,* 1998, vol. 98, 939
- **Y. Li ; R. R. Breaker.** *J. Am. Chem. Soc.,* 1999, vol. 121, 5364
- **U. Kaukinen ; S. Lyytikainen ; S. Mikkola ; H. Lonnberg.** *Nucleic Acids Res.,* 2002, vol. 30, 468